(19) Europäisches Patentamt
European Patent Office
Office européen des brevets

(11) EP 1 893 717 B1

(12) # EUROPÄISCHE PATENTSCHRIFT

(45) Veröffentlichungstag und Bekanntmachung des Hinweises auf die Patenterteilung:
**19.05.2010 Patentblatt 2010/20**

(21) Anmeldenummer: **06777283.0**

(22) Anmeldetag: **08.06.2006**

(51) Int Cl.:
***C09K 8/58*** *(2006.01)* ***C09K 8/60*** *(2006.01)*

(86) Internationale Anmeldenummer:
**PCT/EP2006/062993**

(87) Internationale Veröffentlichungsnummer:
**WO 2006/131541 (14.12.2006 Gazette 2006/50)**

(54) **TENSIDMISCHUNGEN FÜR DIE TERTIÄRE ERDÖLFÖRDERUNG**

SURFACTANT MIXTURES FOR TERTIARY OIL RECOVERY

MELANGES DE TENSIOACTIFS POUR LA RECUPERATION TERTIAIRE DE PETROLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026716**

(43) Veröffentlichungstag der Anmeldung:
**05.03.2008 Patentblatt 2008/10**

(73) Patentinhaber: **BASF SE**
**67056 Ludwigshafen (DE)**

(72) Erfinder:
- **HUFF, Jürgen**
  **67063 Ludwigshafen (DE)**
- **OETTER, Günter**
  **67227 Frankenthal (DE)**
- **KÜHNLE, Angelika**
  **49076 Osnabrück (DE)**
- **PETROVIC, Susanne**
  **67063 Ludwigshafen (DE)**
- **GUZMANN, Marcus**
  **69242 Mühlhausen (DE)**
- **MÜNSTER, Ingo**
  **67459 Böhl-Iggelheim (DE)**
- **BRODT, Gregor**
  **64646 Heppenheim (DE)**

(56) Entgegenhaltungen:

| | |
|---|---|
| **EP-A- 0 444 760** | **US-A- 4 265 264** |
| **US-A- 4 266 610** | **US-A- 4 534 411** |
| **US-A- 4 844 756** | **US-A- 5 110 487** |
| **US-A- 5 747 619** | **US-A1- 2005 085 397** |
| **US-B1- 6 706 667** | **US-B1- 6 828 281** |

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung einer Mischung, enthaltend ein Tensid und ein Cotensid als wässrige Lösung zum Fluten von unterirdischen Lagerstätten von Kohlenwasserstoffen sowie ein Verfahren.

Bei den bekannten Techniken zur Förderung von Kohlenwasserstoffen aus unterirdischen Lagerstätten (Erdölförderung) lässt sich üblicherweise nur ein Teil des in der Lagerstätte vorhandenen Erdöls fördern. Nach dem Anbohren einer neuen Lagerstätte wird das Erdöl in aller Regel durch den Eigendruck in der Lagerstätte gefördert. Dies ist die so genannte Primärförderung. Lässt der Lagerstättendruck nach, dann kann dieser auch durch Einpressen von Wasser wieder erhöht oder aufrechterhalten werden. Dies ist die so genannte sekundäre Erdölförderung. Aber auch mittels sekundärer Förderung lässt sich ein erheblicher Teil des Erdlöls nicht aus dem Speichergestein herauslösen. Oft verbleiben nach primärer und sekundärer Förderung noch 65 % und mehr des Öles in der Lagerstätte.

Es ist bekannt, die Ausbeute durch tertiäre Ölfördermaßnahmen weiter zu steigern. Eine Übersicht zur tertiären Ölförderung findet sich beispielsweise im Journal of Petroleum Science and Engineering 19 (1998) 265-280. Zur tertiären Ölförderung gehören beispielsweise Wärmeverfahren, bei denen Heißwasser oder Heißdampf (das so genannte "Dampffluten") in die Lagerstätte eingepresst wird. Hierdurch wird die Viskosität des Öls herabgesetzt. Als Flutmedium können auch Gase wie $CO_2$ oder Stickstoff Einsatz finden. Weiterhin bekannt sind Verfahren, bei denen man geeignete Chemikalien als Hilfsmittel einsetzt. Beispielsweise können der wässrigen Phase viskositätserhöhende Polymere zugesetzt werden. Hierdurch wird die Viskosität der Wasserphase der der Ölphase angeglichen und das Öl leichter durch die wässrige Phase aus der porösen Formation verdrängbar. Diese Technik ist als so genanntes "Polymerfluten" bekannt.

Es ist weiterhin bekannt, dass die Förderausbeute im Wesentlichen von zwei gegensätzlichen Kräften abhängt, und zwar von Viskositätskräften und Kapillarkräften, die üblicherweise als Kapillaritätszahl $N_c$ ausgedrückt werden, wobei

$$N_c = \frac{\mu\nu}{\gamma \cos\theta} \; .$$

Dabei bedeutet $\mu$ die Viskosität des Erdöl mobilisierenden Fluids, $\nu$ die Darcy-Geschwindigkeit (Durchfluss pro Flächeneinheit), y die Grenzflächenspannung zwischen Erdöl mobilisierender Flüssigkeit und Erdöl und $\theta$ der Kontaktwinkel zwischen Erdöl und Erdöl mobilisierender Flüssigkeit (vgl.: Moore and Slobod, 1959, nach D.O. Shah: Surface Phenomena in Enhanced Oil Revovery).

Es ist bekannt, dass die Kapillaritätszahl nach der sekundären Erdölförderung im Bereich von etwa $10^{-6}$ liegt und dass es notwendig ist, die Kapillaritätszahl auf etwa $10^{-3}$ bis $10^{-2}$ zu erhöhen, um zusätzliches Erdöl durch tertiäre Maßnahmen zu mobilisieren,. Hierzu kann beispielsweise die Grenzflächenspannung zwischen Erdöl und Erdöl mobilisierender Phase, $\sigma$, durch Zusatz von Tensiden abgesenkt werden (so genanntes "Tensidfluten").

So ist z.B. in US4266610 ein Verfahren zur tertiären Erdölförderung beschrieben, das ein Sulfonat-Tensid sowie ein polymeres Cotensid nutzt.

Es war Aufgabe der Erfindung, ein Verfahren zur Mobilisierung und Förderung von Kohlenwasserstoffen aus unterirdischen Lagerstätten durch Tensidfluten zur Verfügung zu stellen, bei dem die Konzentration an Tensid in der Tensidflut bei gleicher Effizienz gegenüber bekannten Tensidfluten reduziert ist, und das somit wirtschaftlicher ist.

Es war auch Aufgabe der Erfindung, eine Verwendung von Mischungen, enthaltend ein Tansid und ein Cotensid zur Verfügung zu stellen, wonach die gleiche Effizienz von Tensidfluten zur Gewinnung von Kohlenwasserstoffen aus unterirdischen Lagerstätten bei niedrigerer Konzentration an Tensid gegenüber bekannten Tensidfluten gewährleistet ist.

Die Aufgabe wird gelöst durch die Verwendung einer flüssigen Mischung, enthaltend ein Tensid und ein Cotensid zum Fluten von unterirdischen Lagerstätten von Kohlenwasserstoffen zwecks Mobilisierung und Förderung der Kohlenwasserstoffe aus den unterirdischen Lagerstätten, wobei das Cotensid eine Substanz oder eine Gruppe von Substanzen, ausgewählt aus der nachfolgenden Aufzählung ist:

- ein amphiphiles Kammpolymer, gemäß Anspruch 1
- ein amphiphiles Polymer; gemäß Anspruch 1
- ein amphiphiles Polymer gemäß Anspruch 1.

Vorliegend wird unter den Begriffen ein Tensid bzw. ein Cotensid jeweils auch eine Mischung von Tensiden bzw. Cotensiden verstanden.

Es wurde überraschend gefunden, dass Cotenside, die die Struktur von Kammpolymeren aufweisen, für den erfindungsgemäßen Einsatz besonders geeignet sind.

Als Unterschied im amphiphilen Charakter wird vorliegend verstanden, dass sich die Seitenketten untereinander und/oder vom Rückgrat bezüglich ihrer Affinität zu polaren bzw. zu unpolaren Phasen unterscheiden.

Das Rückgrat des Kammpolymers ist hydrophob und alle Seitenketten des Kammpolymers sind hydrophil. Besonders günstig ist es, wenn das im Rückgrat enthaltende Monomere A selber eine Seitenkette trägt, die sich in ihrem amphiphilen Charakter vorzugsweise von den an A' angebrachten Seitenketten unterscheidet.

Das Kammpolymer ist aus sich wiederholenden Struktureinheiten $[A_1]n_1$, $[A'_1]m_1$ und $[X_1]l_1$ gebildet, wobei die Struktureinheiten

$$\left[A_1\right]_{n_1} \text{ und } \left[A'_1\right]_{m_1}$$

das Rückgrat bilden und die Struktureinheit

$$\left[A'_1\right]_{m_1}$$

eine Ankerfunktion zum Anbinden der die Seitenketten bildenden Struktureinheiten

$$\left[X_1\right]_{l_1}$$

hat, und wobei die Variablen n, m und l Molfraktionen sind, mit

$$n_1 + m_1 + l_1 = 1,$$

$$n_1 \geq m_1$$

und

$$l_1 > m_1.$$

Das Kammpolymer ist somit ein Copolymer, wobei die das Rückgrat bildenden Struktureinheiten $[A_1]n_1$ und $[A'_1]m_1$ beliebig angeordnet sein können, das heißt sowohl streng alternierend (dann sind die Variablen n und m gleich) als auch als Blockcopolymere, als statistische Copolymere oder mit Gradienten.

Geeignet sind beispielsweise Copolymere, wie sie in EP-A 0 412 389 zur Verwendung als Mittel zum Hydrophobieren von Leder oder Pelzfellen beschrieben sind und durch radikalische Copolymerisation von $C_8$ bis $C_{40}$-Monoolefinen mit ethylenisch ungesättigten $C_4$- bis $C_8$-Dicarbonsäureanhydriden nach Art einer Substanzpolymerisation bei Temperaturen von 80 bis 300°C zu Copolymerisaten mit Molmassen von 500 bis 20.000 g/mol, anschließender Solvolyse der Anhydridgruppen der Copolymerisate und zumindest partielle Neutralisation der bei der Solvolyse entstehenden Carboxylgruppen in wässrigem Medium mit Basen erhältlich sind.

Die erfindungsgemäßen Cotenside haben Molekularmassen im Bereich von 500 bis 100.000 g/mol, besonders bevorzugt im Bereich von 1.000 bis 50.000 g/mol.

Vorzugsweise betragen die Molfraktionen n, m und l unabhängig voneinander 0,001 bis 99,9 %, bevorzugt ist n größer oder gleich m und l größer m. Besonders bevorzugt ist m zwischen 0,001 bis 0,4, n zwischen 0,001 bis 0,99 und l zwischen 0,2 und 0,99.

Vorteilhaft können zur Bildung der Struktureinheit $[A_1]n_1$ Monomere eingesetzt werden, die eine oder mehrere hydrophobe Seitenketten tragen.

Vorteilhaft ist das die Struktureinheit $[A_1]n_1$ bildende Monomer eine Substanz oder eine Mischung von Substanzen, ausgewählt aus der nachstehenden Aufzählung:

- unverzweigte oder verzweigte Alkene mit 15 bis 50, vorzugsweise mit 20 bis 35 Kohlenstoffatomen pro Molekül, bevorzugt $\alpha$-Olefine,
- Ethylen
- reaktive Polyisobutene, gebildet aus Polyisobutenketten, die am Ende oder in der Nähe des Endes der Polyisobutenkette noch eine reaktiorisfähige Doppelbindung aufweisen,
- Styrol oder
- (Meth)acrylate mit hydrophoben Seitenketten.

Für die Bildung der Struktureinheit $[A_1]n_1$ kann somit vorteilhaft von langkettigen $\alpha$-Olefinen ausgegangen werden. Besonders vorteilhaft ist auch der Einsatz von reaktiven Polyisobutenen, das heißt von Polyisobutenen die aus Ketten gebildet sind, die am Ende oder in der Nähe des Endes der Kette noch eine reaktionsfähige Doppelbindung aufweisen.

Alle oben aufgeführten Substanzen oder Mischungen von Substanzen sind großtechnische Produkte, und entsprechend preiswert verfügbar.

Zur Bildung der Struktureinheit $[A'_1]m_1$, das heißt der Struktureinheit, die eine Ankerfunktion zum Anbinden von Seitenketten aufweist, wird bevorzugt eine Substanz oder eine Mischung von Substanzen, ausgewählt aus der nachstehenden Aufzählung, eingesetzt:

- Maleinsäureanhydrid oder seine Derivate, die vorzugsweise eine polymerisierbare oder alkoxilierbare Seitenkette tragen,
- Vinylalkohole oder ihre Derivate, die vorzugsweise eine polymerisierbare oder alkoxilierbare Seitenkette tragen,
- (Meth)acrolein oder
- (Meth)acrylsäure oder ihre Derivate die vorzugsweise eine oder mehrere polymerisierbare oder alkoxilierbare Seitenketten tragen.

Unter dem Begriff "Polymerisation" bzw. "polymerisierbar" sollen vorliegend alle Verfahren verstanden werden, mit denen eine polymere Verbindung hergestellt werden kann. Neben den klassischen Verfahren zur Polymerisation sollen insbesondere auch Verfahren wie Polykondensation, Polyaddition einbezogen sein.

Auch hierbei handelt es sich durchwegs um großtechnische, und somit preiswert verfügbare Produkte.

Das die Struktureinheit $[X_1]l_1$ bildende Monomer ist vorteilhaft Ethylenoxid oder eine Mischung aus Ethylenoxid und Propylenoxid, das zur Bildung der Seitenketten (n) zu einem hydrophilen Polyethylenoxid- oder Polyethylenoxid-/Polypropylenoxid-Block weiter umgesetzt wird.

Besonders günstig ist es, die Struktureinheit $[X_1]l_1$ aus einer Mischung von Ethylenoxid und Propylenoxid, bevorzugt mit einem Propylenoxidanteil von 5 bis 20 %, aufzubauen.

Es wurde gefunden, dass für die Effizienzsteigerung von Tensiden besonders wirksame Cotensidstrukturen erhalten werden, wenn man die aus Ethylenoxid oder Ethylenoxid/Propylenoxid-Mischungen gebildeten hydrophilen Seitenketten mit hydrophoben Blöcken endgruppenverschließt, das heißt dass alle oder ein Teil der aus den hydrophilen Ethylenoxid- oder Ethylenoxid-/Propylenoxid-Blöcken gebildeten Seitenketten in jeweils einem hydrophoben Block, vorzugsweise einem hydrophoben Poly- oder Oligoalkylenoxid oder in einer verzweigten oder unverzweigten $C_{10}$- bis $C_{30}$-alkylkette enden.

Die die Seitenketten bildenden Struktureinheiten $[X_1]l_1$ können auch aus einem unverzweigten oder verzweigten Alkyl-, Cycloalkyl-, Aryl- oder Aralkylrest mit 4 bis 400 Kohlenstoffatomen oder einem Polyolefin oder hydrophoben Poly- oder Oligoalkylenoxid-Block gebildet sein.

Der Polyolefinblock kann bevorzugt aus einem oder mehreren der nachfolgenden Monomeren: Ethen, Propen, 1-Buten, 2,3-Buten, 2-Methyl-1,2-propen (Isobuten), 1-Penten, 2,3-Penten 2-Methyl-1,2-buten, 3-Methyl-1,2-buten, 2,3-Hexen 3,4-Hexen, 2-Methyl-1,2-penten, 2-Ethyl-1,2-buten, 3-Methyl-1,2-Peten, Decen, 4-Methyl-1,2-penten, Styrol oder aus einer Mischung aus Olefinen technisch verfügbarer Raffinatströme gebildet sein.

Besonders bevorzugt ist eine Mischung, umfassend ein Cotensid, wobei das die Struktureinheit [A']m bildende Monomer Maleinsäureanhydrid und das die Struktureinheit $[X_1]l_1$ bildende Monomer Ethylenoxid ist. Eine weitere bevorzugte Mischung umfasst ein Cotensid, wobei das die Struktureinheit $[A'_1]m_1$ bildende Monomer Maleinsäureimid und die Seitenkette(n) unverzweigte oder verzweigte Alkylreste mit 3 bis 20 Kohlenstoffatomen oder ein Polyethylenoxid oder Polyethylenoxid-/Polypropylenoxid-Block ist (sind), die vorzugsweise in einem hydrophoben Block, insbesondere einer verzweigten oder unverzweigten $C_{10}$- bis $C_{30}$-Alkylkette enden.

Bevorzugt ist auch eine Mischung, umfassend ein Cotensid, wobei das die Struktureinheit $[A'_1]m_1$ bildende Monomer Vinylalkohol ist und das Monomer X (Meth)acrylsäure oder Ethylenoxid oder eine Mischung aus Ethylenoxid und Propylenoxid ist:

Weiter bevorzugt ist das die Struktureinheit $[A'_1]m_1$ bildende Monomer ein Vinylalkoholderivat mit einer polymerisierbaren Seitenkette und das die Struktureinheit $[X_1]l_1$ bildende Monomer Vinylpyrrolidon, (Meth)acrylsäure oder

Vinylalkohol.

Es ist nicht notwendig, dass alle Struktureinheiten $A'_1$ mit Ankerfunktion auch jeweils tatsächlich mit einer Seitenkette funktionalisiert sind. Die Erfindung umfasst gleichermaßen auch Kammpolymere die noch freie Ankergruppen umfassen, wobei die Ankergruppen entweder nicht umgesetzt oder vor der Reaktion geschützt wurden. Es ist somit möglich, durch entsprechende Funktionalisierung lediglich eines Teils der Struktureinheiten $A'_1$ mit Ankerfunktion ein Polymer mit einer für den speziellen Anwendungsfall geeigneten Dichte an Seitenketten zu synthetisieren.

Für den Fall, dass das die Struktureinheit $[A'_1]m_1$ bildende Monomer Maleinsäureanhydrid ist, können die Maleinsäureanhydrid-Einheiten, die keine Seitenkette tragen, als Anhydrid, als Mono- oder Diester, als Amid oder Imid, als freie Säure sowie in teilweise oder vollständig neutralisierter Form vorliegen.

Für den Fall, dass das die Struktureinheit [A]m bildende Monomer Vinylalkohol ist, können die keine Seitenketten tragenden Vinylalkoholgruppen als freier Alkohol oder als Vinylacetat vorliegen.

Ist das die Struktureinheit $[A'_1]m_1$ bildende Monomer (Meth)acrylat, können die nicht funktionalisierten (Meth) acrylateinheiten als Ester, als Amid, als freie Säure sowie in teilweise oder vollständig neutralisierter Form vorliegen.

Für die erfindungsgemäße Verwendung ist weiterhin ein Cotensid besonders geeignet, das ein amphiphiles Polymer, aufweisend eine oder mehrere hydrophobe Untereinheiten ($A_2$) und eine oder mehrere hydrophile Untereinheiten ($B_2$) ist, die dadurch gekennzeichnet ist, dass eine oder mehrere hydrophobe Untereinheiten ($A_2$) aus einem Polyisobuten-Block gebildet sind, dessen Polyisobuten-Makromoleküle zu mindestens 60 Mol-% terminal angeordnete Doppelbindungen aufweisen.

Bevorzugt ist jede hydrophobe Untereinheit aus einem Polyisobuten-Block gebildet.

Polyisobutene, die der vorstehenden Definition entsprechen, d.h. die zu mindestens 60 Mol-% aus Makromolekülen mit terminal angeordneten Doppelbindungen gebildet sind, werden als sogenannte reaktive Polyisobutene bezeichnet. Dabei werden unter dem Begriff terminal angeordnete Doppelbindungen sowohl $\beta$-olefinische (Vinyl-) Doppelbindungen $-[-CH=C(CH_3)_2]$ als auch $\alpha$-olefinische (Vinyliden-)Doppelbildungen -[-C(CH3)=$CH_2$] verstanden. Bevorzugte reaktive Polyisobutene sind solche, bei denen 80 Mol% der Polyisobuten-Makromoleküle, bezogen auf die Gesamtzahl der Polyisobuten-Makromoleküle, terminal angeordnete Doppelbindungen aufweisen.

Geeignete reaktive Polyisobutene können beispielsweise durch kationische Polymerisation von Isobuten erhalten werden.

Zur Synthese geeigneter Polyisobutene setzt man bevorzugt reines Isobuten ein. Es können aber zusätzlich auch kationisch polymerisierbare Comonomere verwendet werden. Die Menge an Comonomeren sollte jedoch im Regelfall weniger als 20 Gew.-%, vorzugsweise weniger als 10 Gew.-% und insbesondere weniger als 5 Gew.-% betragen.

Als kationisch polymerisierbare Comonomere kommen vor allem Vinylaromaten, wie Styrol und $\alpha$-Methylstyrol, $C_1$-$C_4$-Alkylstyrole, sowie 2-,3- und 4-Methylstyrol sowie 4-tert.-Butylstyrol, $C_3$- bis $C_6$-Alkene wie n-Buten, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht.

Als Isobuten-haltige Einsatzstoffe für das erfindungsgemäße Verfahren eignen sich sowohl Isobuten selber, als auch Isobuten-haltige $C_4$-Kohlenwasserstoffströme, beispielsweise $C_4$-Raffinate, $C_4$-Schnitte aus der Isobutan-Dehydrierung, $C_4$-Schnitte aus Steamcrackem oder sogenannten FCC-Crackern (FCC: Fluid Catalysed Cracking), sofern sie weitgehend von darin enthaltenem 1,3-Butadien befreit sind. Typischerweise liegt die Konzentration von Isobuten in $C_4$-Kohlenwasserstoffströmen im Bereich von 40 bis 60 Gew.-%.

Geeignete $C_4$-Kohlenwasserstoffströme sollten in der Regel weniger als 500 ppm, vorzugsweise weniger als 200 ppm 1,3-Butadien enthalten. Die Anwesenheit von Buten-1, cis- und trans-Buten-2 ist für die Polymerisation weitgehend unkritisch und führt nicht zu Selektivitätsverlusten.

Bei Einsatz von $C_4$-Kohlenwasserstoffströmen als Einsatzmaterial übernehmen die von Isobuten verschiedenen Kohlenwasserstoffe die Rolle eines inerten Lösungsmittels oder werden als Comonomer einpolymerisiert.

Als Lösungsmittel kommen alle organischen Verbindungen in Frage, die im gewählten Temperaturbereich der Herstellung der Polyisobutene flüssig sind und weder Protonen abspalten, noch freie Elektronenpaare aufweisen.

Zu nennen sind insbesondere cyclische und acyclische Alkane wie Ethan, iso- und n-Propan, n-Butan und seine Isomeren, Cyclopentan sowie n-Pentan und seine Isomeren, Cyclohexan sowie n-Hexan und seine Isomeren, n-Heptan und seine Isomeren sowie höhere Homologe, cyclische und acyclische Alkene wie Ethen, iso- und n-Propen, n-Buten, Cyclopenten sowie n-Penten, Cyclohexen sowie n-Hexen, n-Hepten, aromatische Kohlenwasserstoffe wie Benzol , Toluol oder isomeren Xylole. Die Kohlenwasserstoffe können auch halogeniert sein. Beispiele halogenierter Kohlenwasserstoffe umfassen Methylchlorid, Methylbromid, Methylenchlorid, Methylenbromid, Ethylchlorid, Ethylbromid, 1,2-Dichlorethan, 1,1,1-Trichlorethan, Chloroform oder Chlorbenzol. Es können auch Gemische der Lösungsmittel eingesetzt werden, vorausgesetzt, es treten keine unerwünschten Eigenschaften auf.

Verfahrenstechnisch besonders empfehlenswert ist es, Lösungsmittel einzusetzen, die im gewünschten Temperaturbereich sieden. Die Polymerisation erfolgt üblicherweise bei -80°C bis 0°C, bevorzugt -50°C bis -5°C und besonders bevorzugt bei -30°C bis -15°C.

Als Katalysator können reines $BF_3$, seine Komplexe mit Elektronendonatoren oder Mischungen daraus eingesetzt werden. Elektronendonatoren (Lewis-Basen) sind Verbindungen, die ein freies Elektronenpaar, zum Beispiel an einem O, N, P oder S-Atom, aufweisen und mit Lewis-Säuren Komplexe bilden können. Diese Komplexbildung ist in vielen Fällen erwünscht, da so die Aktivität der Lewis-Säure herabgesetzt wird und Nebenreaktionen zurückgedrängt werden. Beispiele für geeignete Elektronendonatoren sind Ether wie Di-Isopropylether oder Tetrahydrofuran, Amine wie Triethylamin, Amide wie Di-Methylacetamid, Alkohole wie Methanol, Ethanol, i-Propanol oder t-Butanol. Die Alkohole wirken außerdem als Protonenquelle und starten so die Polymerisation. Auch über Protonen aus ubiquitären Wasserspuren kann ein kationischer Polymerisationsmechanismus aktiv werden.

Bei der kationischen Polymerisation unter $BF_3$-Katalyse werden weitgehend lineare Polyisobutene erhalten, die an einem Kettenende einen besonders hohen Gehalt an $\alpha$-Olefin-Gruppen aufweisen. Bei geeigneter Reaktionsführung beträgt der $\alpha$-Olefin-Gehalt nicht weniger als 80 %.

Reaktive Polyisobutene, die an beiden Kettenenden reaktive $\alpha$-Olefin-Gruppen aufweisen oder die verzweigt sind, können besonders elegant mittels lebender kationischer Polymerisation erhalten werden. Selbstverständlich können aber auch lineare Polyisobutene, die nur an einem Kettenende eine $\alpha$-Olefin-Gruppe aufweisen, mit dieser Methode synthetisiert werden.

Bei der lebenden kationischen Polymerisation wird Isobuten mit einer geeigneten Kombination aus einem Initiatormolekül $IX_n$ mit einer Lewis-Säure S polymerisiert. Einzelheiten dieser Methode zur Polymerisation sind beispielsweise in Kennedy u. Ivan, "Carbocationic Macromolecular Engineering", Hanser Publishers 1992 offenbart.

Geeignete Initiatormoleküle $IX_n$ weisen eine oder mehrere Abgangsgruppen X auf. Bei der Abgangsgruppe X handelt es sich um eine Lewis Base, die auch noch weiter substituiert sein kann. Beispiele für geeignete Abgangsgruppen umfassen die Halogene Fluor, Chlor, Brom und Jod, geradkettige und verzweigte Alkoxygruppen, wie $C_2H_5O$-, n-$C_3H_7O$-, i-$C_3H_7O$-, n-$C_4H_9O$-, i-$C_4H_9O$-, sec.-$C_4H_9O$- oder t-$C_4H_9O$-, sowie geradkettige und verzweigte Carboxygruppen wie $CH_3$ CO-O-, $C_2H_5$ CO-O-, n-$C_3H_7$ CO-O-, i-$C_3H_7$ CO-O-, n-$C_4H_9$ CO-O-, i-$C_4H_9$ CO-O-, sec.-$C_4H_9$ CO-O-, t-$C_4H_9$ CO-O-. Mit der oder den Abgangsgruppen verbunden ist der Molekülteil I, der unter Reaktionsbedingungen ausreichend stabile Carbokationen $I^+$ ausbilden kann. Zur Auslösung der Polymerisation wird die Abgangsgruppe mittels einer geeigneten Lewis-Säure S abstrahiert: $I\text{-}X + S \rightarrow I^+ + XS^-$ (gezeigt hier nur für den Fall n = 1). Das entstehende Carbokation $I^+$ startet die kationische Polymerisation und wird in das entstehende Polymer eingebaut. Geeignete Lewis-Säuren S sind beispielsweise $AlY_3$, $TiY_4$, $BY_3$, $SnY_4$, $ZnY_2$ wobei Y für Fluor, Chlor, Brom oder Jod steht. Die Polymerisationsreaktion kann durch die Vernichtung der Lewis-Säure abgebrochen werden, beispielsweise durch deren Reaktion mit Alkohol. Dabei bildet sich Polyisobuten welches über terminale $-C(CH_3)_2-Z$ Gruppen verfügt, die anschließend in $\alpha$- und $\beta$-Olefin-Endgruppen übergeführt werden können.

Als Initiatormolekül bevorzugt sind Strukturen, die tertiäre Carbokationen ausbilden können. Besonders bevorzugt sind Reste, die sich von den niederen Oligomeren des Isobutens $H-[CH_2-C(CH_3)_2]_n-X$ ableiten, wobei n bevorzugt für 2 bis 5 steht. Mit derartigen Initiatormolekülen gebildete lineare reaktive Polyisobutene weisen nur an einem Ende eine reaktive Gruppe auf.

Lineare Polyisobutene, die an beiden Enden reaktive Gruppen aufweisen, können erhalten werden, indem man Initiatormoleküle IXQ einsetzt, die zwei Abgangsgruppen X bzw. Q aufweisen, wobei X und Q gleich oder verschieden sein können. In der Technik bewährt haben sich Verbindungen, die $-C(CH_3)_2-X$ Gruppen umfassen. Beispiele umfassen geradkettige oder verzweigte Alkylenreste $C_nH_{2n}$ (wobei n vorzugsweise Werte von 4 bis 30 einnehmen kann), die auch von einer Doppelbindung oder einem Aromaten unterbrochen sein können, wie
$X-(CH_3)_2C-CH_2-C(CH_3)_2-Q$, $X-(CH_3)_2C-CH_2-C(CH_3)_2CH_2-C(CH_3)_2-Q$,
$X-(CH_3)_2C-CH_2-C(CH_3)_2CH_2-C(CH_3)_2CH_2-C(CH_3)_2-Q$ oder
$X-(CH_3)_2C-CH_2-C(CH_3)_2CH_2-C(CH_3)_2CH_2-C(CH_3)_2-CH_2-C(CH_3)_2-Q$,
$X-(CH_3)_2C-CH=CH-C(CH_3)_2-Q$ oder para und/oder meta
$X-(CH_3)_2C-C_6H_4-C(CH_3)_2-Q$.

Verzweigte Polyisobutene können erhalten werden, indem man Initiatormoleküle $IX_n$ einsetzt, die 3 oder mehrere Abgangsgruppen aufweisen, wobei die Abgangsgruppen gleich oder verschieden sein können. Beispiele geeigneter Initiatormoleküle umfassen $X-(CH_3)_2C-C_6H_3-[C(CH_3)_2-Q]-C(CH_3)_2-P$ als 1,2,4 und/oder 1,3,5-Isomer, wobei die Abgangsgruppen bevorzugt gleich sind, aber auch unterschiedlich sein können. Weitere Beispiele für mono-, di-, tri- oder polyfunktionelle Initiatormoleküle sind in dem eingangs zitierten Werk von Kennedy u. Ivan und der dort zitierten Literatur zu finden.

Geeignete Polyisobutene sind beispielsweise die Glissopal®-Marken der BASF AG, beispielsweise Glissopal 550, 1000, 1300 oder 2300, sowie die Oppanol®-Marken der BASF AG, wie Oppanol B10 oder B12.

Für die erfindungsgemäße Mischung sind Cotenside besonders geeignet, die einen Polyisobuten-Block mit einem zahlenmittleren Molekulargewicht $M_n$ im Bereich von 200 bis 20000 Dalton, bevorzugt im Bereich von 200 bis 5000 Dalton, aufweisen.

Je nach Polymerisationsverfahren liegt der Polydispersitätsindex (PDI), d.h. das Verhältnis aus gewichtsmittlerem und zahlenmittlerem Molekulargewicht, der vorzugsweise einsetzbaren Polyisobutene im Bereich von 1,05 bis 10, bevorzugt im Bereich von 1,05 bis 5, besonders bevorzugt im Bereich von 1,05 bis 2,0.

Die Methode zur Bestimmung der Polydispersität (PDI) sowie zum zahlenmittleren und gewichtsmittleren Molekulargewicht ist beispielsweise im Analytiker-Taschenbuch, Band 4, Seiten 433 bis 442, Berlin 1984, beschrieben.

Die Erfindung ist grundsätzlich nicht eingeschränkt bezüglich der zur Bildung des Cotensids einsetzbaren einer oder mehreren hydrophilen Untereinheiten.

Besonders vorteilhaft sind Untereinheiten, die in Wasser besonders gut und in Öl besonders schlecht löslich sind.

Bevorzugt sind eine oder mehrere hydrophile Untereinheiten ($B_2$) aus sich wiederholenden Ethylenoxid- oder Ethylenoxid-/Propylenoxid-Einheiten gebildet, bevorzugt mit einem Anteil von 0 bis 50 % Propylenoxid-, besonders bevorzugt mit einem Anteil von 5 bis 20 % Propylenoxideinheiten. Hierbei kann es sich um ein statistisches Copolymer, ein Gradienten-Copolymer, ein alternierendes oder ein Blockcopolymer aus Ethylenoxid und Propylenoxid handeln.

Weiter bevorzugt sind eine oder mehrere hydrophile Untereinheiten ($B_2$) aus Monomereinheiten, ausgewählt aus der nachfolgenden Gruppe: (Meth)acrylsäure, auch teilweise oder vollständig neutralisiert, (Meth)acrylaten, Vinylacetat, Vinylalkohol, Vinylpyrrolidon, Polyallylalkohol, sowie hydrophile Derivate der vorstehend aufgeführten Monomereinheiten oder aus Mischungen hiervon gebildet.

Die das amphiphile Polymer bildenden hydrophoben und hydrophilen Untereinheiten werden bevorzugt verbunden, indem man den Polyisobuten-Block, der die Basis für die hydrophobe Untereinheit(en) bildet, unter Einführung von polaren Gruppen funktionalisiert und den funktionalisierten Polyisobuten-Block anschließend gegebenenfalls weiter modifiziert.

Der Funktionalisierungsgrad der modifizierten Polyisobutyen-Derivate mit terminalen, polaren Gruppen beträgt mindestens 65%, bevorzugt mindestens 75% und ganz besonders bevorzugt mindestens 85%. Bei den nur an einem Kettenende polare Gruppen aufweisenden Polymeren bezieht sich diese Angabe nur auf dieses eine Kettenende. Bei den an beiden Kettenenden polare Gruppen aufweisenden Polymeren sowie den verzweigten Produkten bezieht sich diese Angabe auf die Gesamtzahl aller Kettenenden. Bei den nicht funktionalisierten Kettenenden handelt es sich sowohl um solche die überhaupt keine reaktive Gruppe aufweisen wie um solche, die zwar eine reaktive Gruppe aufweisen, diese aber im Zuge der Funktionalisierungsreaktion nicht umgesetzt wurde.

Der Begriff "polare Gruppe" ist dem Fachmann bekannt. Bei den polaren Gruppen kann es sich sowohl um protische als auch um aprotische polare Gruppen handeln. Die modifizierten Polyisobutene weisen somit einen hydrophoben Molekülteil aus einem Polyisobutenrest auf sowie einen Molekülteil, der zumindest einen gewissen hydrophilen Charakter aufweist, aus terminalen, polaren Gruppen. Bevorzugt handelt es sich um stark hydrophile Gruppen. Die Begriffe "hydrophil" sowie "hydrophob" sind dem Fachmann bekannt.

Polare Gruppen umfassen beispielsweise Sulfonsäurereste, Carbonsäureanhydride, Carboxyl-Gruppen, Carbonsäureamide, Carbonsäureester, Phosphonsäure-Gruppen, Phosphonester und-amide, Hydroxy-Gruppen, Arylhydroxy-Gruppen, Arylphosphorsäureester, Arylschwefelsäureester, Polyoxyalkylen-Gruppen, Polyoxyalkylenester der genannten Säure-Gruppen, Amino-Gruppen, Polyethylenimino-Gruppen, Amide von Polyethyleniminen der genannten Säuren oder Epoxyde, die auch noch geeignet substituiert sein können.

Geeignete Reaktionen zur Einführung von polaren Gruppen (Funktionalisierung) sind dem Fachmann grundsätzlich bekannt.

Grundsätzlich kann die Funktionalisierung der erfindungsgemäß eingesetzten Polyisobutene ein- oder mehrstufig durchgeführt werden.

In einer bevorzugten Ausführungsform erfolgt die Funktionalisierung des erfindungsgemäß eingesetzten Polyisobutens ein- oder mehrstufig und ist ausgewählt aus:

i) Umsetzung mit aromatischen Hydroxyverbindungen in Gegenwart eines Alkylierungskatalysators unter Erhalt von mit Polyisobutenen alkylierten aromatischen Hydroxyverbindungen,

ii) Umsetzung des Polyisobuten-Blocks mit einer Peroxi-Verbindung unter Erhalt eines epoxidierten Polyisobutens,

iii) Umsetzung des Polyisobuten-Blocks mit einem Alken, das eine mit elektronenziehenden Gruppen substituierte Doppelbindung aufweist (Enophil), in einer En-Reaktion,

iv) Umsetzung des Polyisobuten-Blocks mit Kohlenmonoxid und Wasserstoff in Gegenwart eines Hydroformylierungskatalysators unter Erhalt eines hydroformylierten Polyisobutens,

v) Umsetzung des Polyisobuten-Blocks mit einem Phosphorhalogenid oder einem Phosphoroxychlorid unter Erhalt eines mit Phosphongruppen funktionalisiertem Polyisobutens,

vi) Umsetzung des Polyisobuten-Blocks mit einem Boran und anschließender oxidativer Spaltung unter Erhalt eines hydroxylierten Polyisobutens,

vii) Umsetzung des Polyisobuten-Blocks mit einer $SO_3$-Quelle, bevorzugt Acetylsulfat oder Oleum unter Erhalt eines Polyisobutens mit terminalen Sulfonsäuregruppen,

viii) Umsetzung des Polyisobuten-Blocks mit Stickoxiden und anschließende Hydrierung unter Erhalt eines Polyisobutens mit terminalen Aminogruppen.

Zu i): Alkylierung von aromatischen Hydroxyverbindungen

Zur Derivatisierung kann das reaktive Polyisobuten mit einer aromatischen Hydroxyverbindung in Gegenwart eines Alkylierungskatalysators umgesetzt werden. Geeignete Katalysatoren und Reaktionsbedingungen dieser sogenannten Friedel-Crafts-Alkylierung sind beispielsweise in J. March, Advanced Organic Chemistry, 4. Auflage, Verlag John Wiley & Sons, S. 534-539 beschrieben, worauf hier Bezug genommen wird.

Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Bevorzugte weitere Substituenten sind $C_1$-$C_8$-Alkylgruppen und insbesondere Methyl und Ethyl. Bevorzugt sind insbesondere Verbindungen der allgemeinen Formel,

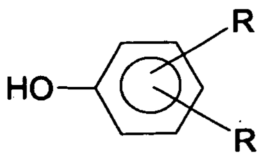

worin $R^1$ und $R^2$ unabhängig voneinander für Wasserstoff, OH oder $CH_3$ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Der Katalysator ist vorzugsweise ausgewählt unter Lewis-sauren Alkylierungskatalysatoren, worunter im Rahmen der vorliegenden Anmeldung sowohl einzelne Akzeptoratome als auch Akzeptor-Ligand-Komplexe, Moleküle, etc. verstanden werden, sofern diese insgesamt (nach außen) Lewis-saure (Elektronenakzeptor-)Eigenschaften aufweisen. Dazu zählen beispielsweise $AlCl_3$, $AlBr_3$, $BF_3$, $BF_3 2\ C_6H_5OH$, $BF_3[O(C_2H_5)_2]_2$, $TiCl_4$, $SnCl_4$, $AlC_2H_5Cl_2$, $FeCl_3$, $SbCl_5$ und $SbF_5$. Diese Alkylierungskatalysatoren können gemeinsam mit einem Cokatalysator, beispielsweise einem Ether, eingesetzt werden. Geeignete Ether sind Di-($C_1$-$C_8$-)alkylether, wie Dimethylether, Diethylether, Di-n-propylether, sowie Tetrahydrofuran, Di-($C_5$-$C_8$-)cycloalkylether, wie Dicyclohexylether und Ether mit mindestens einem aromatischen Kohlenwasserstoffrest, wie Anisol. Wird zur Friedel-Crafts-Alkylierung ein Katalysator-Cokatalysator-Komplex eingesetzt, so liegt das Molmengenverhältnis von Katalysator zu Cokatalysator vorzugsweise in einem Bereich von 1:10 bis 10:1. Die Reaktion kann auch mit Protonensäuren wie Schwefelsäure, Phosphorsäure, Trifluormethansulfonsäure katalysiert werden. Organische Protonensäuren können auch in polymer gebundener Form vorliegen, beispielsweise als Ionenaustauscherharz.

Die Alkylierung kann lösungsmittelfrei oder in einem Lösungsmittel durchgeführt werden. Geeignete Lösungsmittel sind beispielsweise n-Alkane und deren Gemische und Alkylaromaten, wie Toluol, Ethylbenzol und Xylol sowie halogenierte Abkömmlinge davon.

Die Alkylierung wird bevorzugt bei Temperaturen zwischen -10°C und +100°C durchgeführt. Die Reaktion wird üblicherweise bei Atmosphärendruck durchgeführt, kann aber auch bei höheren oder geringeren Drücken durchgeführt werden.

Durch geeignete Wahl der Molmengenverhältnisse von aromatischer Hydroxyverbindung zu Polyisobuten und des Katalysators kann der erzielte Anteil an alkylierten Produkten und deren Alkylierungsgrad eingestellt werden. So werden z. B im Wesentlichen monoalkylierte Polyisobutenylphenole im Allgemeinen mit einem Überschuss an Phenol oder in Gegenwart eines Lewis-sauren Alkylierungskatalysators erhalten, wenn zusätzlich ein Ether als Cokatalysator eingesetzt wird.

Die Reaktion von Polyisobutenen mit Phenolen in Anwesenheit geeigneter Alkylierungskatalysatoren ist z. B. in US 5,300,701 und WO 02/26840 offenbart.

Zur weiteren Funktionalisierung kann man ein in Schritt i) erhaltenes Polyisobutenylphenol einer Umsetzung im Sinne einer Mannichreaktion mit wenigstens einem Aldehyd, beispielsweise Formaldehyd, und wenigstens einem Amin, das wenigstens eine primäre oder sekundäre Aminfunktion aufweist, unterziehen, wobei man eine mit Polyisobuten alkylierte und zusätzlich wenigstens teilweise aminoalkylierte Verbindung erhält. Es können auch Reaktions- und/oder

Kondensationsprodukte von Aldehyd und/oder Amin eingesetzt werden. Die Herstellung solcher Verbindungen ist in WO 01/25 293 und WO 01/25 294 beschrieben, auf die hiermit im vollen Umfang Bezug genommen wird.

Des Weiteren kann ein in Schritt i) erhaltenes Polyisobutenylphenol mit Alkylenoxiden, bevorzugt Ethylenoxid, alkoxyliert werden. Neben Ethylenoxid können nachfolgende reine Alkylenoxide oder auch Mischungen verwendet werden: Propenoxid, 1-Butenoxid 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 2,3-Hexenoxid, 3,4-Hexenoxid, 2-Methyl-1,2-pentenoxid, 2-Ethyl-1,2-butenoxid, 3-Methyl-1,2-Pentenoxid, Decenoxid, 4-Methyl-1,2-pentenoxid, Styroloxid oder eine Mischung aus Oxiden technisch verfügbarer Raffinatströme.

In einer weiteren Ausführungsform werden die erhaltenen Polyisobutenylphenole mit Phosphoroxychlorid zum aromatischen Phosphorhalbester umgesetzt. Dieser wird in einem Folgeschritt mit Polyethyleniminen, Alkylenoxiden oder Polyalkylenoxiden umgesetzt.

ii) Epoxidierung

Zur Funktionalisierung kann das reaktive Polyisobuten mit wenigstens einer Peroxiverbindung unter Erhalt eines epoxidierten Polyisobutens umgesetzt werden. Geeignete Verfahren zur Epoxidierung sind in J. March, Advanced Organic Chemistry, 4. Auflage, Verlag John Wiley & Sons, S.826-829 beschrieben, worauf hier Bezug genommen wird. Vorzugsweise wird als Peroxiverbindung wenigstens eine Persäure, wie m-Chlorperbenzoesäure, Perameisensäure, Peressigsäure, Trifluorperessigsäure, Perbenzoesäure und 3,5-Dinitroperbenzoesäure eingesetzt. Die Herstellung der Persäuren kann in situ aus den entsprechenden Säuren und $H_2O_2$ gegebenenfalls in Gegenwart von Mineralsäuren erfolgen. Weitere geeignete Epoxidierungsreagenzien sind beispielsweise alkalisches Wasserstoffperoxid, molekularer Sauerstoff und Alkylperoxide, wie tert.-Butylhydroperoxid. Geeignete Lösungsmittel für die Epoxidierung sind beispielsweise übliche, nicht polare Lösungsmittel. Besonders geeignete Lösungsmittel sind Kohlenwasserstoffe wie Toluol, Xylol, Hexan oder Heptan.

Zur weiteren Funktionalisierung können die epoxidierten Polyisobutene, die in Schritt ii) erhalten werden, mit Ammoniak umgesetzt werden, wobei Polyisobutenaminoalkohole erhalten werden (EP-A 0 476 785).

In einem weiteren Schritt werden die erhaltenen epoxidierten Polyisobutene mit genannten Alkylenoxiden umgesetzt. Bevorzugt ist dabei Ethylenoxid.

iii) En-Reaktion

Zur Funktionalisierung kann das reaktive Polyisobuten des Weiteren mit wenigstens einem Alken, das eine elektronenarme Doppelbindung aufweist, in einer En-Reaktion umgesetzt werden (siehe z. B. DE-A 4 319 672 oder H. Mach und P. Rath in "Lubrication Science II (1999), S. 175-185, worauf voll inhaltlich Bezug genommen wird). Bei der En-Reaktion wird ein als En bezeichnetes Alken mit einem Allyl-ständigen Wasserstoffatom mit einem elektronenarmen Alken, dem sogenannten Enophil, in einer pericyclischen Reaktion, umfassend eine Kohlenstoff-Kohlenstoff-Bindungsknüpfung, eine Doppelbindungsverschiebung und einen Wasserstofftransfer umgesetzt. Vorliegend reagiert das reaktive Polyisobuten als En. Geeignete Enophile sind Verbindungen, wie sie auch als Dienophile in der Diels-Alder-Reaktion eingesetzt werden. Als Enophile eignen sich Fumarsäuredichlorid, Fumarsäure, Maleinsäuredichlorid, Maleinsäureanhydrid und Maleinsäure, bevorzugt Maleinsäureanhydrid und Maleinsäure. Ganz besonders bevorzugt wird als Enophil Maleinsäureanhydrid eingesetzt. Dabei resultieren mit Bernsteinsäureanhydridgruppen (Succinanhydridgruppen) funktionalisierte Polyisobutene (Polyisobutenylbernsteinsäureanhydrid, PIBSA), wie in EP-A 0 156 310 offenbart.

Die En-Reaktion kann gegebenenfalls in Gegenwart einer Lewis-Säure als Katalysator durchgeführt werden. Geeignet sind beispielsweise Aluminiumchlorid und Ethylaluminiumchlorid.

Bei der Umsetzung wird eine neue $\alpha$-Olefingruppe am Kettenende erzeugt. Zur weiteren Funktionalisierung kann man beispielsweise ein mit Bernsteinsäureanhydridgruppen derivatisiertes Polyisobuten einer Folgereaktion unterziehen, die ausgewählt ist unter:

a) Umsetzung mit wenigstens einem Amin unter Erhalt eines wenigstens teilweise mit Succinimidgruppen und/oder Succinamidgruppen funktionalisierten Polyisobutens,

b) Umsetzung mit wenigstens einem Alkohol unter Erhalt eines mit Succinestergruppen funktionalisierten Polyisobutens,

c) Umsetzung mit wenigstens einem Alkylenoxid unter Erhalt eines mit zwei Succinestergruppen (pro Bernsteinsäureanhydrid-Gruppe) funktionalisierten Polyisobutens,

d) Umsetzung mit Maleinsäureanhydrid zu einem Produkt mit zwei Bernsteinsäureanhydrid-Gruppen am Kettenende

(sogenannte PIBSA),

e) Hydrolyse unter Erhalt eines mit Bernsteinsäuregruppen funktionalisierten Polyisobutens, wobei die Bernsteinsäuregruppen wie unter c) mit Alkylenoxiden umgesetzt werden,

f) sofern nach der Umsetzung der Bernsteinsäureanhydrid-Gruppe noch freie Carboxyl-Gruppen vorhanden sind, können diese auch in Salze umgewandelt werden. Als Kationen in Salzen kommen vor allem Alkalimetallkationen, Ammonium-ionen sowie Alkylammoiniumionen in Frage.

*Zu a) und b)*

Die Bernsteinsäureanhydridgruppen können zur weiteren Derivatisierung beispielsweise mit polaren Reaktionspartnern wie Alkoholen oder Aminen umgesetzt werden. Bevorzugt handelt es sich bei geeigneten polaren Reaktionspartnern um primäre Alkohole ROH oder primäre Amine $RNH_2$ bzw. sekundäre Amine RR'NH, wobei R für einen linearen oder verzweigten gesättigten Kohlenwasserstoffrest steht, der mindestens einen Substituenten ausgewählt aus der Gruppe OH, $NH_2$ oder $NH_3^+$ und gegebenenfalls ein oder mehrere CH(O)-Gruppen trägt und gegebenenfalls nicht benachbarte -O- und/oder -NH- und/oder tertiäre -N- Gruppen aufweist, und R' unabhängig von R dieselbe Bedeutung hat. Hierbei können beide Carbonsäuregruppen des Bernsteinsäureanhydrids zur Umsetzung kommen oder auch nur eine, während die andere Carbonsäuregruppe als freie Säuregruppe oder als Salz vorliegt. Die obigen Substituenten können auch noch weiter, beispielsweise durch Alkoxylierung modifiziert werden.

Weitere Synthesevarianten für die Derivatisierung von Bernsteinsäureanhydridgruppen sind in den Anmeldungen mit den Aktenzeichen DE 101 251 58.0 und DE 101 476 50.7 genannt.

Es ist dem Fachmann auch bekannt, eine Bemsteinsäureanhydridgruppe unter geeigneten Bedingungen in eine Bernsteinsäureimid-Gruppe überzuführen.

In einer weiteren Ausführungsform kann reaktives Polyisobuten mit Maleinsäureanhydrid radikalisch copolymerisiert werden (vgl. WO 95/07944, WO 01/55059, WO 90/03359). Die so erhaltenen streng alternierenden Copolymere können wie oben beschrieben weiter umgesetzt werden. Bevorzugt sind die Umsetzungen mit Alkylenoxiden, Polyalkylenoxiden oder Polyethyleniminen.

iv) Hydroformylierung

Zur Funktionalisierung kann man das reaktive Polyisobuten einer Umsetzung mit Kohlenmonoxid und Wasserstoff in Gegenwart eines Hydroformylierungskatalysators unterziehen, wobei ein hydroformyliertes Polyisobuten erhalten wird.

Geeignete Katalysatoren für die Hydroformylierung sind bekannt und umfassen vorzugsweise eine Verbindung oder einen Komplex eines Elements der VIII. Nebengruppe des Periodensystems, wie Co, Rh, Ir, Ru, Pd oder Pt. Zur Aktivitäts- und/oder Selektivitätsbeeinflussung werden vorzugsweise mit N- oder P-haltigen Liganden modifizierte Hydroformylierungskatalysatoren eingesetzt. Geeignete Salze dieser Metalle sind beispielsweise die Hydride, Halogenide, Nitrate, Sulfate, Oxide, Sulfide oder die Salze mit Alkyl- oder Arylcarbonsäuren oder Alkyl- oder Arylsulfonsäuren. Geeignete Komplexverbindungen weisen Liganden auf, die beispielsweise ausgewählt sind unter Halogeniden, Aminen, Carboxylaten, Acetylacetonat, Aryl- oder Alkylsulfonaten, Hydrid, CO, Olefinen, Dienen, Cycloolefinen, Nitrilen, N-haltigen Heterocyclen, Aromaten und Heteroaromaten, Ethern, $PF_3$, Phospholen, Phosphabenzolen sowie ein-, zwei- und mehrzähnigen Phosphin-, Phosphinit-, Phosphonit-, Phosphoramidit und Phosphitliganden.

Im Allgemeinen werden unter Hydroformylierungsbedingungen aus den jeweils eingesetzten Katalysatoren oder Katalysatorvorstufen katalytisch aktive Spezies der allgemeinen Formel $H_xM_y(CO)_zL_q$ gebildet, worin M für ein Metall der VIII. Nebengruppe, L für einen Liganden und q, x, y, z für ganze Zahlen, abhängig von der Wertigkeit und Art des Metalls sowie der Bindigkeit des Liganden L, stehen.

Nach einer bevorzugten Ausführungsform werden die Hydroformylierungskatalysatoren in situ in dem für die Hydroformylierungsreaktion eingesetzten Reaktor hergestellt.

Eine andere bevorzugte Form ist die Verwendung eines Carbonylgenerators, bei dem vorgefertigtes Carbonyl z. B. an Aktivkohle adsorbiert wird und nur das desorbierte Carbonyl der Hydroformylierung zugeführt wird, nicht aber die Salzlösungen, aus denen das Carbonyl erzeugt wird.

Als Katalysatoren geeignete Rhodiumverbindungen oder -komplexe sind z. B. Rhodium(II)- und Rhodium (III)-salze, wie Rhodium(III)-chlorid, Rhodium(III)-nitrat, Rhodium(III)-sulfat, Kalium-Rhodiumsulfat, Rhodium(II)- bzw. Rhodium(III)-carboxylat, Rhodium(II)- und Rhodium(III)-acetat, Rhodium(III)-oxid, Salze der Rhodium(III)- säure, Trisammoniumhexachlororhodat(III) etc. Weiterhin eignen sich Rhodiumkomplexe, wie Rhodiumbiscarbonylacetylacetonat, Acetylacetonatobisethylenrhodium(I) etc.

Ebenfalls geeignet sind Rutheniumsalze oder -verbindungen. Geeignete Rutheniumsalze sind beispielsweise

Ruthenium(III)chlorid, Ruthenium(IV)-, Ruthenium(VI)- oder Ruthenium(VIII)oxid, Alkalisalze der Rutheniumsauerstoffsäuren wie $K_2RuO_4$ oder $KRuO_4$ oder Komplexverbindungen, wie z. B. $RuHCl(CO)(PPh_3)_3$. Auch können die Metallcarbonyle des Rutheniums wie Trisrutheniumdodecacarbonyl oder Hexarutheniumoctadecacarbonyl, oder Mischformen, in denen CO teilweise durch Liganden der Formel $PR_3$ ersetzt sind, wie $Ru(CO)_3(PPh_3)_2$, verwendet werden.

Geeignete Cobaltverbindungen sind beispielsweise Cobalt(II)chlorid, Cobalt(II)sulfat, Cobalt(II)carbonat, Cobalt(II)nitrat, deren Amin- oder Hydratkomplexe, Cobaltcarboxylate, wie Cobaltformiat, Cobaltacetat, Cobaltethylhexanoat, Cobaltnaphthanoat, sowie der Cobalt-Caprolactamat-Komplex. Auch hier können die Carbonylkomplexe des Cobalts wie Dicobaltoctacarbonyl, Tetracobaltdodecacarbonyl und Hexacobalthexadecacarbonyl eingesetzt werden.

Die genannten und weiteren geeignete Verbindungen sind im Prinzip bekannt und in der Literatur hinreichend beschrieben.

Geeignete Aktivierungsmittel, die zur Hydroformylierung eingesetzt werden können, sind z. B. Brönsted-Säuren, Lewis-Säuren, wie $BF_3$, $AlCl_3$, $ZnCl_2$, und Lewis-Basen.

Die Zusammensetzung des eingesetzten Synthesegases aus Kohlenmonoxid und Wasserstoff kann in weiten Bereichen variieren. Das molare Verhältnis von Kohlenmonoxid und Wasserstoff beträgt in der Regel etwa 5:95 bis 95:5, bevorzugt etwa 40:60 bis 60:40. Die Temperatur bei der Hydroformylierung liegt im Allgemeinen in einem Bereich von etwa 20 bis 200°C, bevorzugt etwa 50 bis 190°C. Die Reaktion wird in der Regel bei dem Partialdruck des Reaktionsgases bei der gewählten Reaktionstemperatur durchgeführt. Im Allgemeinen liegt der Druck in einem Bereich von etwa 1 bis 700 bar, bevorzugt 1 bis 300 bar.

Die Carbonylzahl der erhaltenen hydroformylierten Polyisobutene hängt vom zahlenmittleren Molekulargewicht $M_n$ ab. Vorzugsweise weisen Produkte mit einem zahlenmittleren Molekulargewicht $M_n$ von 10000 Dalton Carbonylzahlen von 2 bis 5,6 mg KOH/g, insbesondere 3,6 bis 5,6 mg KOH/g auf. Produkte mit einem zahlenmittleren Molekulargewicht $M_n$ von 40000 Dalton weisen Carbonylzahlen von 0,5 bis 1,4 mg KOH/g, insbesondere 0,9 bis 1,4 mg KOH/g auf. Die Carbonylzahlen für Produkte mit anderen Molekulargewichten lassen sich durch Inter- oder Extrapolation bestimmen.

Vorzugsweise wird der überwiegende Teil der in dem eingesetzten mittelmolekularen, reaktiven Polyisobuten enthaltenden Doppelbindungen durch die Hydroformylierung in Aldehyde überführt. Durch Einsatz geeigneter Hydroformylierungskatalysatoren und/oder eines Überschusses an Wasserstoff im eingesetzten Synthesegas kann der überwiegende Teil der im Edukt enthaltenen, ethylenisch ungesättigten Doppelbindungen auch direkt in Alkohole umgewandelt werden (siehe z. B. DE-A 100 03 105). Dies kann auch in einer zweistufigen Funktionalisierung gemäß dem im Folgenden beschriebenen Reaktionsschritt B) erfolgen.

Die durch Hydroformylierung erhaltenen funktionalisierten Polyisobutene eignen sich vorteilhaft als Zwischenprodukte für die Weiterverarbeitung durch Funktionalisierung wenigstens eines Teils der in ihnen enthaltenen Aldehydfunktionen.

A) Oxocarbonsäuren

Zur weiteren Funktionalisierung kann man die in Schritt iv) erhaltenen hydroformylierten Polyisobutene mit einem Oxidationsmittel unter Erhalt eines wenigstens teilweise mit Carboxygruppen funktionalisierten Polyisobutens umsetzen.

Für die Oxidation von Aldehyden zu Carbonsäuren können allgemein eine große Anzahl verschiedener Oxidationsmittel und -verfahren verwendet werden, die z. B. in J. March, Advanced Organic Chemistry, Verlag John Wiley & Sons, 4. Auflage, S. 701ff. (1992) beschrieben sind. Dazu zählen z. B. die Oxidation mit Permanganat, Chromat, Luftsauerstoff, etc. Die Oxidation mit Luft/Sauerstoff kann sowohl katalytisch in Gegenwart von Metallsalzen als auch in Abwesenheit von Katalysatoren erfolgen. Als Metalle werden bevorzugt solche verwendet, die zu einem Wertigkeitswechsel befähigt sind, wie Cu, Fe, Co, Mn, etc. Die Reaktion gelingt in der Regel auch in Abwesenheit eines Katalysators. Bei der Luftoxidation kann der Umsatz leicht über die Reaktionsdauer gesteuert werden.

Nach einer weiteren Ausführungsform wird als Oxidationsmittel eine wässrige Wasserstoffperoxidlösung in Kombination mit einer Carbonsäure, wie z. B. Essigsäure, verwendet. Die Säurezahl der erhaltenen Polyisobutene mit Carboxylfunktion hängt vom zahlenmittleren Molekulargewicht $M_n$ ab. Vorzugsweise weisen Produkte mit einem zahlenmittleren Molekulargewicht $M_n$ von 10000 Dalton Säurezahlen von 2 bis 5,6 mg KOH/g, insbesondere 3,6 bis 5,6 mg KOH/g auf. Produkte mit einem zahlenmittleren Molekulargewicht $M_n$ von 40000 Dalton weisen Säurezahlen von 0,5 bis 1,4 mg KOH/g, insbesondere 0,9 bis 1,4 mg KOH/g auf. Die Säurezahlen für Produkte mit anderen Molekulargewichten lassen sich durch Inter- oder Extrapolation bestimmen.

Die erhaltenen Polyisobutene mit Carboxyfunktion können in einem weiteren Reaktionsschritt umgesetzt werden. Umsetzungen können sein mit Alkylenoxiden, Veresterungen mit Polyalkylenoxiden oder Amidbildungen mit Polyethyleniminen.

B) Oxoalkohole

Nach einer weiteren geeigneten Ausführungsform können die in Schritt iv) erhaltenen hydroformylierten Polyisobutene einer Umsetzung mit Wasserstoff in Gegenwart eines Hydrierkatalysators unter Erhalt eines wenigstens teilweise mit Alkoholgruppen funktionalisierten Polyisobutens unterzogen werden.

Geeignete Hydrierungskatalysatoren sind im allgemeinen Übergangsmetalle wie Cr, Mo, W, Fe, Rh, Co, Ni, Pd, Pt, Ru, etc., oder deren Mischungen, die zur Erhöhung der Aktivität und Stabilität auf Trägern, wie Aktivkohle, Aluminiumoxid, Kieselgur, etc., aufgebracht werden können. Zur Erhöhung der katalytischen Aktivität können Fe, Co, und bevorzugt Ni auch in Form der Raney-Katalysatoren als Metallschwamm mit einer sehr großen Oberfläche verwendet werden.

Die Hydrierung der Oxo-Aldehyde aus Stufe iv) erfolgt in Abhängigkeit von der Aktivität des Katalysators vorzugsweise bei erhöhten Temperaturen und erhöhtem Druck. Bevorzugt liegt die Reaktionstemperatur bei etwa 80 bis 150°C und der Druck bei etwa 50 bis 350 bar.

Die Alkoholzahl der erhaltenen Polyisobutene mit Hydroxygruppen hängt vom zahlenmittleren Molekulargewicht $M_n$ ab. Vorzugsweise weisen Produkte mit einem zahlenmittleren Molekulargewicht $M_n$ von 10000 Dalton Alkoholzahlen von 2 bis 5,6 mg KOH/g, insbesondere 3,6 bis 5,6 mg KOH/g auf. Produkte mit einem zahlenmittleren Molekulargewicht Mn von 40000 Dalton weisen Alkoholzahlen von 0,5 bis 1,4 mg KOH/g, insbesondere 0,9 bis 1,4 mg KOH/g auf. Die Alkoholzahlen für Produkte mit anderen Molekulargewichten lassen sich durch Inter- oder Extrapolation bestimmen.

Die mit Alkoholgruppen funktionalisierten Polyisobutene können zusätzlich mit Alkylenoxiden, bevorzugt Ethylenoxid, alkoxyliert werden.

C) Aminsynthese

Nach einer weiteren geeigneten Ausführungsform werden die in Schritt iv) erhaltenen hydroformylierten Polyisobutene zur weiteren Funktionalisierung einer Umsetzung mit Wasserstoff und Ammoniak oder einem primären oder sekundären Amin in Gegenwart eines Aminierungskatalysators unter Erhalt eines wenigstens teilweise mit Amingruppen funktionalisierten Polyisobutens unterzogen.

Geeignete Aminierungskatalysatoren sind die zuvor in Stufe B) beschriebenen Hydrierungskatalysatoren, bevorzugt Kupfer, Cobalt oder Nickel, die in Form der Raney-Metalle oder auf einem Träger eingesetzt werden können. Weiter eignen sich auch Platinkatalysatoren.

Bei der Aminierung mit Ammoniak werden aminierte Polyisobutene mit primären Aminofunktionen erhalten. Zur Aminierung geeignete primäre und sekundäre Amine sind Verbindungen der allgemeinen Formeln $R\text{-}NH_2$ und RR'NH, worin R und R' unabhängig voneinander beispielsweise für $C_1$-$C_{10}$-Alkyl, $C_6$-$C_{20}$-Aryl, $C_7$-$C_{20}$-Arylalkyl, $C_7$-$C_{20}$-Alkylaryl oder Cycloalkyl stehen.

Die Aminzahl der erhaltenen Polyisobutene mit Aminofunktion hängt vom zahlenmittleren Molekulargewicht $M_n$ ab. Vorzugsweise weisen Produkte mit einem zahlenmittleren Molekulargewicht $M_n$ von 10000 Dalton Aminzahlen von 2 bis 5,6 mg KOH/g, insbesondere 3,6 bis 5,6 mg KOH/g auf. Produkte mit einem zahlenmittleren Molekulargewicht $M_n$ von 40000 Dalton weisen Aminzahlen von 0,5 bis 1,4 mg KOH/g, insbesondere 0,9 bis 1,4 mg KOH/g auf. Die Aminzahlen für Produkte mit anderen Molekulargewichten lassen sich durch Inter- oder Extrapolation bestimmen.

Die mit Aminogruppen funktionalisierten Polyisobutene können zusätzlich mit Alkylenoxiden, bevorzugt Ethylenoxid, alkoxyliert werden.

v) Herstellung von Phosphonsäurederivaten

Zur Funktionalisierung kann das reaktive Polyisobuten einer Umsetzung mit $PX_5$ (X = Cl, Br, I) unter Erhalt eines mit einer Phosphonsäurehalogenid-Gruppe funktionalisierten Polyisobutens unterzogen werden. Zur weiteren Funktionalisierung und somit zur Ermöglichung einer Pfropfung wird das derivatisierte Polyisobuten einer Folgereaktion unterzogen, die ausgewählt ist unter:

a) Umsetzung mit wenigstens einem Amin oder Polyethylenimin unter Erhalt eines wenigstens teilweise mit Phosphonamidamid-Gruppen funktionalisierten Polyisobutens,

b) Umsetzung mit wenigstens einem Alkohol bzw. Polyalkylenoxid unter Erhalt eines mit Phosphonester-Gruppen funktionalisierten Polyisobutens,

c) Umsetzung mit wenigstens einem Alkylenoxid unter Erhalt eines mit Phosphonester-Gruppen funktionalisierten Polyisobutens,

d) Hydrolyse unter Erhalt eines mit Phosphonsäure-Gruppen funktionalisierten Polyisobutens, wobei die Phosphonsäure-Gruppen wie unter c) mit Alkylenoxiden umgesetzt werden,

e) sofern nach der Umsetzung der Phosphonsäurehalogenid-Gruppe noch freie Säure-Gruppen vorhanden sind, können diese auch in Salze umgewandelt werden. Als Kationen in Salzen kommen vor allem Alkalimetallkationen, Ammonium-ionen sowie Alkylammoniumionen in Frage.

vi) Hydroborierung

Zur Funktionalisierung kann man das reaktive Polyisobuten einer Umsetzung mit einem (gegebenenfalls in situ erzeugten) Boran unterziehen, wobei ein hydroxyliertes Polyisobuten erhalten wird.

Geeignete Verfahren zur Hydroborierung sind in J. March, Advanced Organic Chemistry, 4. Auflage, Verlag John Wiley & Sons, S. 783-789 beschrieben, worauf hiermit Bezug genommen wird. Geeignete Hydroborierungsreagenzien sind beispielsweise Diboran, das in der Regel in situ durch Umsetzung von Natriumborhydrid mit $BF_3$-Etherat erzeugt wird, Diisoamylboran (Bis-[3-methylbut-2-yl]boran), 1,1,2-Trimethylpropylboran, 9-Borbicyclo[3.3.1]nonan, Düsocamphenylboran, die durch Hydroborierung der entsprechenden Alkene mit Diboran erhältlich sind, Chlorboran-Dimethylsulfid, Alkyldichlorborane oder $H_3B\text{-}N(C_2H_5)_2$.

Üblicherweise führt man die Hydroborierung in einem Lösungsmittel durch. Geeignete Lösungsmittel für die Hydroborierung sind beispielsweise acyclische Ether wie Diethylether, Methyl-tert.-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird in der Regel von der Reaktivität des Hydroborierungsmittels bestimmt und liegt normalerweise zwischen dem Schmelz- und Siedepunkt des Reaktionsgemisches, vorzugsweise im Bereich von O°C bis 60°C.

Üblicherweise setzt man das Hydroborierungsmittel im Überschuss bezogen auf das Alken ein. Das Boratom addiert sich vorzugsweise an das weniger substituierte und somit sterisch weniger gehinderte Kohlenstoffatom.

Üblicherweise werden die gebildeten Alkylborane nicht isoliert, sondern durch nachfolgende Umsetzung direkt in die Wertprodukte überführt. Eine sehr bedeutsame Umsetzung der Alkylborane ist die Reaktion mit alkalischem Wasserstoffperoxid unter Erhalt eines Alkohols, der vorzugsweise formal der anti-Markovnikov-Hydroxylierung des Alkens entspricht.

Die mit Alkoholgruppen funktionalisierten Polyisobutene können zusätzlich mit Alkylenoxiden, bevorzugt Ethylenoxid, alkoxyliert werden.

vii) Umsetzung mit einer $SO_3$-Quelle

Zur Funktionalisierung kann das reaktive Polyisobuten des Weiteren mit einer $SO_3$-Quelle umgesetzt werden, wobei ein Polyisobuten mit terminalen Sulfonsäuregruppen gebildet wird.

Die mit Sulfonsäuregruppen funktionalisierten Polyisobutene können durch Umsetzung der reaktiven Polyisobutene mit einer $SO_3$-Quelle hergestellt werden. Geeignete $SO_3$-Quellen sind ein Mischung aus Schwefeltrioxid und Luft, Schwefeltrioxid-Hydrate, Schwefeltrioxidaminkomplexe, Schwefeltrioxidetherkomplexe, Schwefeltrioxidphosphatkomplexe, Oleum, Acetylsulfat, eine Mischung von Schwefeltrioxid und Essigsäureanhydrid, Sulfaminsäure, Alkylsulfate oder Chlorsulfonsäuren. Die Reaktion kann entweder in Substanz oder in einem beliebigen inerten wasserfreien Lösungsmittel erfolgen. Geeignete Reaktionstemperaturen liegen im Bereich von -30°C bis +200°C und sind von dem eingesetzten Sulfonierungsreagenz abhängig. Beispielsweise erfolgt eine Sulfonierung mit Acetylsulfat bei niedrigen Temperaturen und erhöhte Temperaturen sollten vermieden werden, da sonst eine Zersetzung des Produktes eintreten kann. Das Sulfonierungsreagenz wird im Allgemeinen in einem Molverhältnis zu Polyisobuten von 1:1 bis 2:1 eingesetzt. Bevorzugt wird Acetylsulfat oder eine Mischung von Schwefelsäure und Essigsäureanhydrid, wobei Acetylsulfat in situ gebildet wird, eingesetzt, wobei direkt das mit Sulfonsäuregruppen funktionalisierte Polyisobuten gebildet wird. Andere der genannten Sulfonierungsreagenzien, z. B. die Mischung aus Schwefeltrioxid und Sauerstoff, können zunächst ein intermediäres Sulton bilden, das zur gewünschten Sulfonsäure hydrolysiert werden muss. Ein Verfahren zur Herstellung von mit Sulfonsäuregruppen funktionalisierten Polyisobutenen ist beispielsweise in WO 01/70830 offenbart.

Die mit Sulfonsäure-Gruppen funktionalisierten Polyisobutene werden mit Alkylenoxiden, Polyalkylenoxiden oder Polyethyleniminen umgesetzt.

Sind nach der Funktionalisierung noch freie Säure-Gruppen vorhanden, können diese noch in die Salz-Form überführt werden. Als Kationen in Salzen kommen vor allem Alkalimetallkationen, Ammonium-ionen sowie Alkylammoniumionen in Frage.

viii) Funktionalisierung mit Aminogruppen

Zur Funktionalisierung kann das reaktive Polyisobuten mit Stickoxiden umgesetzt werden, wobei nach anschließender Hydrierung Polyisobutene mit terminalen Aminogruppen erhalten werden.

Geeignete Stickoxide sind z. B. NO, $NO_2$, $N_2O_3$, $N_2O_4$, Mischungen dieser Stickoxide untereinander und Mischungen dieser Stickoxide mit Sauerstoff. Besonders bevorzugt sind Mischungen von NO oder $NO_2$ mit Sauerstoff. Des Weiteren können die Stickoxide zusätzlich Inertgase, z. B. Stickstoff, enthalten. Die Umsetzung der Polyisobutene mit den Stickoxiden erfolgt im Allgemeinen bei einer Temperatur von -30 bis +150°C in einem inerten organischen Lösungsmittel. Die erhaltenen Produkte werden anschließend hydriert, bevorzugt durch katalytische Hydrierung mit Wasserstoff in Anwesenheit von Hydrierkatalysatoren. Die Hydrierung wird im Allgemeinen in einem Temperaturbereich von 20 bis 250°C durchgeführt, in Abhängigkeit von dem eingesetzten Reduktionssystem. Der Hydrierdruck beträgt in der katalytischen Hydrierung im Allgemeinen 1 bar bis 300 bar. Ein Verfahren zur Herstellung von mit Aminogruppen terminierten Polymerisaten ist z. B. in WO 97/03946 offenbart.

Die mit Amino-Gruppen funktionalisierten Polyisobutene können zusätzlich mit Alkylenoxiden, bevorzugt Ethylenoxid, alkoxyliert werden.

Werden Säuregruppen (Carbonsäure-, Phosphonsäure-, Phosphorsäure-, Schwefelsäure-Gruppen) mit Polyalkylenoxiden umgesetzt, können Polyalkylenoxide verwendet werden wie zum Beispiel Polyethylenoxid, Polypropylenoxid, gemischte Copolymere aus EO und PO, Monoalkylpolyethylenoxid (Alkyl = Methyl-, Ethyl-, $C_{12}$-, $C_{18}$-, etc.), Monoaminoethylenoxid etc.. Bei den Umsetzungen der Säure-Gruppen mit diesen Alkylenoxiden handelt es sich um sogenannte polymeranaloge Reaktionen (Veresterungen). Die Länge der Alkylenoxidkette kann 3 bis 400 Einheiten betragen.

Die in den erfindungsgemäßen Mischungen einzusetzenden Cotenside weisen bevorzugt eine AB-Struktur auf.

Weitere bevorzugte Strukturen des Cotensids sind ApBq mit p und q unabhängig voneinander von 1 bis 8 oder Kammstrukturen aus $A_2$ und $B_2$.

Vorteilhaft kann für die erfindungsgemäße Verwendung auch ein Cotensid eingesetzt werden, das ein amphiphiles Polymer mit der allgemeinen Strukturformel

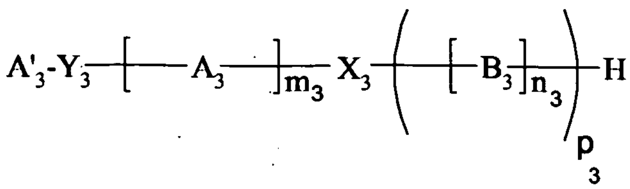

(I)

ist, worin

$A'_3$ ein unverzweigter oder verzweigter Alkyl-, Cycloalkyl-, Aryl- oder Aralkylrest mit 8-30 C-Atomen,
$Y_3$ O oder S,
$A_3$ eine Struktureinheit mit der Formel

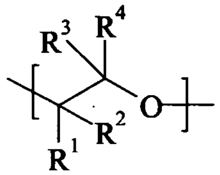

,

worin

$R^1$, $R^2$, $R^3$ und $R^4$ unabhängig voneinander die Substituenten Wasserstoff, Methyl, Ethyl, n-Propyl, iso-Propyl, Oktyl- oder Phenyl sind, mit der Einschränkung, dass höchstens drei der Substituenten $R^1$, $R^2$, $R^3$ und $R^4$ Wasserstoff sind,

$m_3$ eine Laufzahl im Bereich von 10 bis 300,

$X_3$ eine Struktureinheit mit der Formel

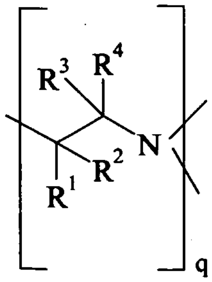

,

worin die Substituenten

| | |
|---|---|
| $R^1$, $R^2$, $R^3$ und $R^4$ | unabhängig voneinander jeweils Wasserstoff, Methyl, Ethyl, n-Propyl, iso-Propyl, Oktyl oder Phenyl sind, |
| q = 0 oder q = 1, | |
| $B_3$ | eine monomere Untereinheit basierend auf Ethylenoxid oder einer Mischung aus Ethylenoxid und Propylenoxid, |
| $n_3$ | eine Laufzahl im Bereich von 20 bis 500 und |
| $p_3$ = q+ 1 ist. | |

Die allgemeine Strukturformel umfasst somit sowohl lineare Strukturen, wenn q = 0 ist, als auch in $\gamma$-Form verzweigte Strukturen, wenn q = 1 ist.

Die Struktureinheit $A'_3$-$Y_3$ ist ein hydrophober Bauteil des Cotensids, und zwar ein monofunktioneller unverzweigter oder verzweigter Alkohol- oder Thiolrest, abgeleitet aus der Gruppe der $C_8$- bis $C_{30}$-Alkyl-, Cycloalkyl-, Aryl- oder Aralkylalkohole oder -thiole. Bevorzugt sind verzweigte oder unverzweigte Alkohole oder -thiole, mit 8 bis 30 C-Atomen pro Alkohol- oder Thiolrest.

Obwohl als Starter-Alkohole A'-OH grundsätzlich auch alle kürzerkettigen aliphatischen Monohydroxyalkohole mit 1 bis 5 Kohlenstoffatomen pro Molekül eingesetzt werden können, sind monofunktionelle aliphatische Alkohole mit 6 bis 18 Kohlenstoffatomen pro Molekül bevorzugt, besonders bevorzugt monofunktionelle aliphatische Alkohole mit 8 bis 15 Kohlenstoffatomen pro Molekül.

Geeignete Alkohole sind insbesondere Octanol, 2-Ethylhexanol, Nonanol, Decanol, Undecanol, Dodecanol, 2-Butyloctanol, Tridecanol, Tetradecanol, Pentadecanol, iso-Octanol, iso-Nonanol, iso-Decanol, iso-Undecanol, iso-Dodecanol, iso-Tridecanol, iso-Tetradecanol, iso-Pentadecanol bevorzugt iso-Decanol, 2-Propylheptanol, Tridecanol, isoTridecanol oder Gemische aus $C_{13}$- bis $C_{15}$-Alkoholen oder Gemische von 2-Propylheptanol mit strukturisomeren $C_{10}$-Alkoholen, Oxoalkohole, wie sie üblicherweise durch Hydroformulierung von linearen oder verzweigten Olefinen mit 4 bis 29 Kohlenstoff, die zum Beispiel durch Oligomerisierung von Ethen, Propen, 1-Buten, isomeren Buten-Gemischen oder aus Gemischen der zuvor genannten Alkene hergestellt werden können, erhalten werden, oder von Alkoholen, wie sie ausgehend von Olefinen mit 5 bis 30 Kohlenstoffatomen entweder durch Ozonolyse und nachfolgende Reduktion oder durch Epoxidierung und nachfolgende Hydrolyse oder durch Halogenierung mit Chlor oder Brom und nachfolgende alkalische Hydrolyse erhalten werden, ableiten.

Beispielsweise kann es sich bei den erfindungsgemäß als Starterverbindung eingesetzten Alkoholen um Guerbet-Alkohole handeln, insbesondere Ethylhexanol, Propylheptanol, Butyloctanol. Daher betrifft die vorliegende Erfindung auch in einer besondere bevorzugten Ausführungsform ein Verfahren, wobei die Starterverbindung ein Guerbet-Alkohol ist.

Bei den als Starterverbindung eingesetzten Alkoholen kann es sich auch um Gemische verschiedener Isomere handeln.

Diese Gemische können sich aus den vorgenannten Alkoholen ableiten oder bei deren Herstellung anfallen, beispielsweise Rohprodukte und einzelne Fraktionen, wie sie bei der destillativen Aufarbeitung der Rohprodukte anfallen. Beispiele für geeignete Gemische sind sogenannte Oxoöle oder Oxoölfraktionen, wie sie bei der Herstellung von Oxoalkoholen regelmäßig anfallen.

Vorteilhaft kann als Starteralkohol A'-OH ein Alkoholgemisch eingesetzt werden, das durch Trimerisierung von

Buten und anschließende Hydroformylierung und Hydrierung erhalten und als Tridecanol N bezeichnet wird.

Propylheptanol beispielsweise kann ausgehend von Valeraldehyd durch Aldolkondensation und nachfolgende Hydrierung erhalten werden. Die Herstellung von Valeraldehyd und den entsprechenden Isomeren erfolgt durch Hydroformylierung von Buten, wie beispielsweise in US 4,287,370, Beilstein E IV 1, 32 68, Ullmanns Encyclopedia of Industrial Chemistry, 5. Auflage, Band A1, Seiten 323 und 328 f beschrieben. Die nachfolgende Aldolkondensation ist beispielsweise beschrieben in US 5,434,313 in Römpp, Chemie Lexikon, 9. Auflage, Stichwort "Aldol-Addition", Seite 91. Die Hydrierung des Aldolkondensationsproduktes folgt allgemeinen Hydrierbedingungen.

Des Weiteren kann 2-Propylheptanol durch Kondensation von 1- Pentanol (als Mischung der entsprechenden Methylbutanole-1) in Gegenwart von KOH bei erhöhten Temperaturen hergestellt werden, siehe zum Beispiel Marcel Guerbet, C.R. Acad Sci Paris 128, 511,1002 (1899). Des Weiteren ist auf Römpp, Chemie Lexikon, 9. Auflage, Georg Thieme Verlag Stuttgart, und die dort genannten Zitate sowie Tetrahedron, Vol. 23, Seiten 1723 bis 1733, hinzuweisen.

Weiterhin sind auch Alkohole geeignet, die aus einer Addition von Aceton an Aldehyde mit nachfolgender Hydrierung entstehen, wie in DE-A 100 35 617 beschrieben. Geeignet sind auch Paraffin-Oxdidationsprodukte, die im Wesentlichen sekundäre Alkohole darstellen (zum Beispiel von C12/14-Paraffin-Gemischen oder $C_{10}$- bis $C_{16}$-Paraffin-Gemischen). Geeignete Alkohole sind auch zum Beispiel sekundäre Alkohole, die man durch saure Addition von Wasser an Olefine oder durch radikalische oder sonstige Oxidation von Olefinen erhält.

Nach den oben beschriebenen Verfahren sind auch eine Vielzahl von Handelsprodukten erhältlich, die häufig als Isomerenmischungen vorliegen und preiswert zur Verfügung stehen. Beispielsweise genannt seien das Produkt der Umsetzung von 2-Ethylhexanal mit Aceton oder Methylethylketon und abschließender Hydrierung, das Produkt der Umsetzung von $C_{13/15}$-Aldehyd mit Aceton oder Methylethylketon, das Produkt der Umsetzung eines Isomerengemisches unterschiedlicher $C_{13}$-Aldehyde, von sogenanntem iso-Tridecanal mit Aceton oder Methylethylketon. Beispiele für Starter-Alkohole, die durch Addition von Wasser am $\alpha$-Olefinen erhältlich sind, sind 2-Decanol, 2-Dodecanol, 2-Tetradecanol oder 2-Hexadecanol.

Als Starter-Alkohole A'-OH eignen sich weiterhin alicyclische und aromatische Hydroxyverbindungen, vorzugsweise Verbindungen der Formeln

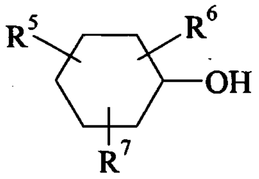

und

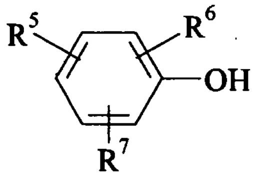

worin

$R^5$, $R^6$ und $R^7$ unabhängig voneinander für Wasserstoff oder $C_1$-$C_{30}$-Alkyl stehen.

Bevorzugte alicyclische und aromatische Hydroxyverbindungen sind Cyclohexanol, Phenol, die Kresol-Isomere, Isobutylphenol, Isobutylkresol, Diisobutylphenol, Diisobutylkresol, tert.-Butylphenol, tert.-Butylkresol, Di-tert.-butylphenol, Di-tert.-butylkresol, Isooctylphenol, Diisooctylphenol, Isononylphenol, Diisononylphenol, Isododecylphenol, Diisododecylphenol und Mischungen davon.

Die hydrophobe Struktureinheit A ist bevorzugt aus einem oder mehreren der nachfolgenden Monomere: Propenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 2,3-Hexenoxid, 3,4-Hexenoxid, 2-Methyl-1,2-pentenoxid, 2-Ethyl-1,2-butenoxid, 3-Methyl-1,2-pentenoxid, 4-Methyl-1,2-pentenoxid, Decenoxid, 4-Methyl-1,2-pentenoxid, Styroloxid oder aus Gemischen hiervon gebildet. Dazu zählen vorzugsweise auch durch Oxidation großtechnisch zugänglicher Olefinströme erhältliche Gemische, die weitere von den zuvor genannten verschiedene Alkylenoxide und/oder von der Oxidation nicht erfasste Olefine und/oder Inerte (Alkane) enthalten können.

Die Laufzahl $m_3$, die die Anzahl der sich wiederholenden Struktureinheiten $A_3$ bezeichnet, nimmt bevorzugt einen Wert im Bereich von 50 bis 250, insbesondere von 60 bis 160, an.

Die Struktureinheit $X_3$, enthaltend eine Aminogruppe, kann als Verzweigungsstelle in das amphiphile Polymer eingebaut werden.

Die Struktureinheit [B]n ist ein hydrophiler Bauteil des Cotensids, gebildet aus sich wiederholenden Ethylenoxid- oder Ethylenoxid-/Propylenoxid-Einheiten. Dabei ist $B_3$ eine monomere Untereinheit, basierend auf Ethylenoxid oder auf einer Mischung aus Ethylenoxid (EO) und Propylenoxid (PO). Die Struktureinheit $[B_3]n_3$ kann ein statistisches Copolymer, ein Gradientcopolymer, ein alternierendes oder ein Blockcopolymer aus EO und PO sein.

Die Polymerstruktur kann ein einziges hydrophiles Bauteil $[B_3]n_3$ oder aber, über die Verzweigungsstelle am Stickstoffatom, zwei hydrophile Bauteile $[B_3]n_3$ umfassen.

Die Laufzahl $n_3$, die die Anzahl der sich wiederholenden Struktureinheiten $B_3$ bezeichnet, nimmt bevorzugt einen Wert im Bereich zwischen 50 und 300 an.

Vorteilhaft kann $B_3$ eine Ethylenoxid-/Propylenoxid-Mischung mit 0 bis 50 % Propylenoxid, vorzugsweise mit 5 bis 20 % Propylenoxid sein.

Die für die erfindungsgemäße Verwendung einsetzbare Mischung umfasst neben den vorstehend beschriebenen Cotensiden ein Tensid. Dabei kann es sich auch um eine Mischung von Tensiden handeln. Grundsätzlich kann jedes Tensid, aus jeder der bekannten Tensid-Gruppen, insbesondere ionische oder nichtionische Tenside, oder auch Mischungen von ionischen oder nicht-ionischen Tensiden eingesetzt werden.

Von den Tensidklassen her sind geeignet nicht-ionische, anionische, kationische, amphotere Tenside; insbesondere auch Polymertenside, Peptidtenside, Silikontenside, aminosäurebasierte Tenside, Zuckertenside, fettbasierte Tenside, Geminitenside, Aminoxide, Amidoaminoxide, Alkylbetaine, Ethercarboxylate, Ampho-Acetate, Alkylsulfate oder Sulfosuccinate.

Der Anteil des Cotensids, bezogen auf das Tensid, liegt im Bereich von 0,01 bis 99,99 %, insbesondere zwischen 1 und 50 %, besonders bevorzugt zwischen 5 und 25%.

Geeignete anionische Tenside sind beispielsweise Fettalkoholsulfate von Fettalkoholen mit 8 bis 22, vorzugsweise 10 bis 18 Kohlenstoffatomen, zum Beispiel C9- bis C11-Alkoholsulfate, C12- bis C13-Alkoholsulfate, Cetylsulfat, Myristylsulfat, Palmitylsulfat, Stearylsulfat und Talgfettalkoholsulfat.

Weitere geeignete anionische Tenside sind sulfatierte ethoxylierte $C_8$-bis $C_{22}$-Alkohole (Alkylethersulfate) bzw. deren lösliche Salze. Verbindungen dieser Art werden beispielsweise dadurch hergestellt, das man zunächst einen $C_8$-bis $C_{22}$-, vorzugsweise einen $C_{10}$- bis $C_{18}$-Alkohol, zum Beispiel einen Fettalkohol, alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 mol Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte $C_8$- bis $C_{22}$-Alkohole, die Ethylenoxid und Propylenoxid oder Ethylenoxid und Butylenoxid enthalten. Die alkoxylierten $C_8$-bis $C_{22}$-Alkohole können die Ethylenoxid-, Propylenoxid- und Butylenoxideinheiten in Form von Blöcken oder in statistischer Verteilung enthalten.

Geeignet sind auch Alkansulfonate, wie $C_8$-bis $C_{24}$-, vorzugsweise $C_{10}$- bis $C_{18}$-Alkansulfonate sowie Seifen, wie Na oder K-Salze von $C_8$-bis $C_{24}$-Carbonsäuren.

Weitere geeignete anionische Tenside sind N-Acylsarkosinate mit aliphatischen gesättigten oder ungesättigten $C_8$- bis $C_{25}$-Acylresten, vorzugsweise $C_{10}$- bis $C_{20}$-Acylresten, zum Beispiel N-Oleoylsarkosinat.

Weiterhin können die erfindungsgemäßen Mischungen $C_{10}$-bis $C_{13}$-lineare und/oder - leicht verzweigte Alkylbenzolsulfonate (LAS) enthalten.

Die anionischen Tenside werden der Mischung, vorzugsweise in Form von Salzen zugegeben. Geeignete Kationen in diesen Salzen sind Alkalimetallsalze wie Natrium, Kalium und Lithium und Ammoniumsalze wie zum Beispiel Hydroxyethylammonium-, Di(hydroxyethyl)ammonium- und Tri(hydroxyethyl)ammoniumsalze.

Geeignete nichtionische Tenside sind insbesondere:

- alkoxylierte $C_8$-bis $C_{22}$-Alkohole wie Fettalkoholalkoxylate oder Oxoalkoholalkoxylate. Diese können mit Ethylenoxid, Propylenoxid und/oder Butylenoxid alkoxyliert sein. Als Tenside einsetzbar sind hierbei sämtliche alkoxylierten Alkohole, die mindestens zwei Moleküle eines der vorstehend genannten Alkylenoxide addiert enthalten. Hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Die nichtionischen Tenside enthalten pro Mol Alkohol im allgemeinen 2 bis 50, vorzugsweise 3 bis 20 Mol mindestens eines Alkylenoxids. Vorzugsweise enthalten diese als Alkylenoxid Ethylenoxid. Die Alkohole haben vorzugsweise 10 bis 18 Kohlenstoffatome. Je nach Art des bei der Herstellung verwendeten Alkoxylierungskatalysators weisen die Alkoxylate eine breite oder enge Alkylenoxid-Homologenverteilung auf;
- Alkylphenolalkoxylate wie Alkylphenolethoxylate mit $C_6$-bis $C_{14}$-Alkylketten und 5 bis 30 Alkylenoxideinheiten;
- Alkylpolyglucoside mit 8 bis 22, vorzugsweise 10 bis 18 Kohlenstoffatomen in der Alkylkette und im allgemeinen 1 bis 20, vorzugsweise 1,1 bis 5 Glucosideinheiten,
- Sorbitanalkanoate, auch alkoxyliert;
- N-Alkylglucamide, Fettsäurealkoxylate, Fettsäureaminalkoxylate, Fettsäureamidalkoxylate, Fettsäurealkanolamidalkoxylate, Blockcopolymere aus Ethylenoxid, Propylenoxid und/oder Butylenoxid, Polyisobuten-Ethoxylate, Polyisobuten-Maleinsäureanhydrid-Derivate, Monoglyceride, auch alkoxyliert sowie Bisglyceride.

Besonders geeignete nichtionische Tenside sind Alkylalkoxylate oder Gemische von Alkylalkoxylaten, wie sie beispielsweise in DE-A 102 43 363, DE-A 102 43 361, DE-A 102 43 360, DE-A 102 43 365, DE-A 102 43 366, DE-A

102 43 362 oder in DE-A 43 25 237 beschrieben sind. Hierbei handelt es sich um Alkoxylierungsprodukte, die durch Umsetzung von Alkanolen mit Alkylenoxiden in Gegenwart von Alkoxylierungskatalysatoren erhalten wurden oder um Gemische von Alkoxylierungsprodukten. Besonders geeignete Starteralkohole sind die sogenannten Guerbet-Alkohole, insbesondere Ehtylhexanol, Propylheptanol und Butyloktanol. Besonders bevorzugt ist Propylheptanol. Bevorzugte Alkylenoxide sind Propylenoxid und Ethylenoxid, wobei Alkylalkoxylate mit direkter Anbindung eines bevorzugt kurzen Poylypropylenoxidblocks an den Starteralkohol, wie sie beispielsweise in DE-A 102 43 365 beschrieben sind, insbesondere aufgrund ihres geringen Restalkoholgehalts und ihrer guten biologischen Abbaubarkeit bevorzugt sind.

Als Alkoxylierungskatalysatoren können Basen eingesetzt werden, beispielsweise Alkalihydroxide oder Alkalialkoholate, jedoch auch Lewis-Säuren, beispielsweise BF3, SbCl5, SnCl4 x 2H20, BF3 x H3B04, oder BF3-etherat. Besonders geeignete Alkoxylierungskatalysatoren sind Doppelhydroxid-Tone wie Hydrotalkit, die insbesondere mit Additiven modifiziert sein können, wie in DE-A 43 25 237 beschrieben.

Je nach Wahl des Alkoxylierungskatalysators resultieren jeweils spezifische Eigenschaften der Alkoxylate, insbesondere bezüglich der Verteilung des Alkoxylierungsgrades. So werden bei Verwendung der letztgenannten Doppelhydroxid-Tone Alkoxylierungsprodukte mit einer engen Molekulargewichtsverteilung bzw. Homologenverteilung erhalten, die für den Einsatz in den Mischungen mit Cotensiden besonders geeignet sind.

Die vorstehend beschriebenen vorteilhaften Eigenschaften, insbesondere bezüglich des Alkoxylierungsgrades, werden auch durch Einsatz von Doppelmetallcyanid (DMC)-Verbindungen erreicht, wie sie beispielsweise in DE-A 102 43 361 als Alkoxylierungskatalysatoren beschrieben sind.

Gegenstand der Erfindung ist auch ein Verfahren zum Fluten von unterirdischen Lagerstätten von Kohlenwasserstoffen zwecks Mobilisierung und Förderung der Kohlenwasserstoffe aus den unterirdischen Lagerstätten unter Verwendung einer flüssigen Mischung, enthaltend ein Tensid und ein Cotensid, das dadurch gekennzeichnet ist, dass die flüssige Mischung, enthaltend ein Tensid und ein Cotensid durch mindestens ein Bohrloch in eine unterirdische Lagerstätte von Kohlenwasserstoffen eingepresst und der Lagerstätte durch mindestens ein davon verschiedenes Bohrloch Kohlenwasserstoffe entnommen werden und dass in einer weiteren Verfahrensstufe in das Bohrloch Wasser eingepresst wird.

Hierbei ist es möglich, die Mischung, enthaltend ein Tensid und ein Cotensid unverdünnt einzusetzen, sofern dieselbe unter Anwendungsbedingungen flüssig ist.

Es ist jedoch auch möglich, die flüssige Mischung, enthaltend ein Tensid und ein Cotensid als wässrige Lösung einzusetzen, mit einer Konzentration von 20 bis 95 Gew.-% der Summe aus Tensid und Cotensid, bevorzugt von 30 bis 60 Gew.-% der Summe aus Tensid und Cotensid und einem Tensid/Cotensid-Verhältnis von 2 : 1 bis 50 : 1, insbesondere von 5 : 1 bis 20 : 1.

Es ist auch möglich, die flüssige Mischung, enthaltend ein Tensid und ein Cotensid vor dem Einpressen in das Bohrloch mit Wasser auf 0,01 bis 10 Gew.-% der Summe aus Tensid und Cotensid, insbesondere 0,05 bis 7 Gew.-%, bevorzugt 0,05 bis 5 Gew.-% zu verdünnen, oder dass die Verdünnung der flüssigen Mischung, enthaltend ein Tensid und ein Cotensid mit Wasser erfolgt, welches sich bereits in der Lagerstätte befindet.

Weiterhin können das Tensid und das Cotensid jeweils getrennt einer wässrigen Lösung zugesetzt werden, die durch mindestens ein Bohrloch in eine unterirdische Lagerstätte von Kohlenwasserstoffen eingepresst wird.

Vorteilhaft kann vor dem Einpressen einer wässrigen Lösung, enthaltend ein Tensid und ein Cotensid in die unterirdische Lagerstätte ein Opferagenz eingebracht und/oder nach dem Einpressen der wässrigen Lösung enthaltend ein Tensid und ein Cotensid in die unterirdische Lagerstätte eine Polymerflut eingebracht werden.

Die Erfindung wird im Folgenden anhand eines Ausführungsbeispiels und einer Zeichnung näher erläutert.

Es wurden Ausschnitte aus den Phasendiagrammen Wasser: n-Dekan (1 : 1 ) und dem Tensid Lutensol® ON 50, das heißt einem $C_{10}$-Alkohol umgesetzt mit 5 Mol Ethylenoxid in Abhängigkeit von der Temperatur bestimmt, wobei nach dem erfindungsgemäßen Beispiel zusätzlich ein Cotensid, gebildet aus einem $C_{13}$-Alkohol umgesetzt mit 22 Mol Butylenoxid und 82 Mol Ethylenoxid pro Mol $C_{13}$-Alkohol in einer Konzentration von 10 Gew.-%, bezogen auf das Tensid Lutensol® ON 50 eingesetzt wurde und zum Vergleich das entsprechende Phasendiagramm ohne Zusatz des genannten Cotensids aufgenommen wurde.

Als X-Punkt im Phasendiagramm wird in bekannter Weise die Mindestkonzentration an grenzflächenaktiver Substanz bezeichnet, die benötigt wird, damit sich eine einphasige Mikroemulsion von Wasser und dem Kohlenwasserstoff n-Dekan ausbildet.

Es wurde gefunden, dass sich der X-Punkt im erfindungsgemäßen Beispiel, das heißt durch Zusatz des oben genannten Cotensids, von 22,5 Gew.-% Lutensol bei 45°C auf 15 Gew.-% Lutensol bei 49°C verschiebt.

Das Ausführungsbeispiel zeigt somit, dass sich der X-Punkt im Phasendiagramm Wasser : n-Dekan (1 : 1)/ Lutensol® ON 50 durch Zusatz eines Cotensids entsprechend der Definition in der vorliegenden Patentanmeldung zu einer um 7,5 % niedrigeren Tensidkonzentration verschiebt.

Durch den erfindungsgemäßen Einsatz einer Mischung, enthaltend ein Tensid und ein Cotensid wird daher mit einer geringeren Konzentration an Tensid gegenüber dem Einsatz einer Mischung ohne Zusatz von Cotensid, entsprechend bekannten Tensidfluten, die gleiche Effizienz erreicht, das heißt das Verfahren ist durch die Einsparung an

Tensid wesentlich wirtschaftlicher.

In der Zeichnung zeigt

Figur 1 einen Ausschnitt aus dem Phasendiagramm Wasser: n-Dekan (1 : 1) und Lutensol® ON 50 ohne Zusatz eines Cotensids, zum Vergleich und

Figur 2 einen Ausschnitt aus dem Phasendiagramm Wasser: n-Dekan (1 : 1) und Lutensol® ON 50 mit Zusatz von 10 Gew.-% des Cotensids Kerocom® ES3364 + 90EO, das heißt einem Cotensid gebildet aus einem $C_{13}$-Alkohol umgesetzt mit 22 mol Butylenoxid und 90 mol Ethylenoxid pro mol $C_{13}$-Alkohol.

Der X-Punkt, d.h. die Mindestkonzentration an Tensid, bei der sich eine einphasige Mikroemulsion bildet, liegt bei 22,5 Gew.-% Lutensol® bei 45°C für die Mischung nach dem Vergleich (Figur 1) bzw. 15 Gew.-% Lutensol® bei 49°C für das erfindungsgemäße Beispiel (Figur 2). Der mit 1 bezeichnete Bereich rechts des X-Punktes stellt das Einphasengebiet einer Mikroemulsion dar, der mit $\overline{2}$ bezeichnete Bereich ein Zweiphasengebiet aus einer Wasser in Öl-Mikroemulsion mit Öl im Gleichgewicht, $\underline{2}$ ein Zweiphasengebiet aus Öl in Wasser-Mikroemulsionen, die mit überschüssigem Wasser im Gleichgewicht sind und 3 ein Dreiphasengebiet, bestehend aus einer Mikroemulsion im Gleichgewicht mit überschüssigem Wasser und überschüssigem Öl. Darüber hinaus ist aus den Figuren 1 und 2 ersichtlich, dass sich durch den erfindungsgemäßen Einsatz eines Cotensids parallel zum Einphasengebiet 1 auch das anwendungsrelevante Dreiphasengebiet 3 zu niedrigeren Tensidkonzentrationen, verschiebt.

## Patentansprüche

1. Verwendung einer flüssigen Mischung, enthaltend ein Tensid und ein Cotensid, wobei der Anteil des Cotensids, bezogen auf das Tensid, im Bereich von 0,01 bis 99,99% liegt, zum Fluten von unterirdischen Lagerstätten von Kohlenwasserstoffen zwecks Mobilisierung und Förderung der Kohlenwasserstoffe aus den unterirdischen Lagerstätten, **dadurch gekennzeichnet, dass** das Cotensid eine Substanz oder eine Gruppe von Substanzen, ausgewählt aus der nachfolgenden Aufzählung, ist:

   Typ I: - ein amphiphiles Kammpolymer, aufweisend ein Rückgrat mit am Rückgrat angebrachten zwei oder mehreren Seitenketten, wobei das Rückgrat des Kammpolymers hydrophob ist und alle Seitenketten des Kammpolymers hydrophil sind und wobei das Kammpolymer sich wiederholende Struktureinheiten

$$\left[A_1\right]_{n_1} \quad \left[A'_1\right]_{m_1}, \text{ und } \quad \left[X_1\right]_l$$

   enthält, und wobei die Struktureinheiten

$$\left[A_1\right]_{n_1} \text{ und } \left[A'_1\right]_{m_1}$$

   das Rückgrat bilden und die Struktureinheit

$$\left[A'_1\right]_{m_1}$$

   eine Ankerfunktion zum Anbinden der die Seitenketten bildenden Struktureinheiten

$$\left[X_1\right]_l$$

hat, und wobei die Variablen $n_1$, $m_1$ und l Molfraktionen sind, mit

$$n_1+m_1+l = 1,$$

$$n_1 \geq m_1$$

und

$$l > m_1,$$

und wobei das Cotensid eine mittlere Molekularmasse im Bereich von 500 bis 100.000 g/mol, bevorzugt im Bereich von 1000 bis 50.000 g/mol, aufweist, das die Struktureinheit

$$\left[A_1\right]_{n_1}$$

bildende Monomer eine Substanz oder eine Mischung von Substanzen, ausgewählt aus der nachstehenden Aufzählung ist:

- unverzweigte oder verzweigte Alkene mit 15 bis 50, vorzugweise mit 20 bis 35 Kohlenstoffatomen pro Molekül, bevorzugt α-Olefine,
- Ethylen,
- reaktive Polyisobutene, gebildet aus Polyisobutenketten, die am Ende oder in der Nähe des Endes der Polyisobutenkette noch eine reaktionsfähige Doppelbindung aufweisen,
- Styrol oder
- (Meth)acrylate mit hydrophoben Seitenketten, und

das die Struktureinheit

$$\left[A'_1\right]_{m_1}$$

bildende Monomer eine Substanz oder eine Mischung von Substanzen, ausgewählt aus der nachstehenden Aufzählung, ist:

- Maleinsäureanhydrid,
- Vinylalkohole oder ihre Derivate, die vorzugsweise eine polymerisierbare oder alkoxilierbare Seitenkette tragen,
- (Meth)acrolein oder
- (Meth)acrylsäure oder ihre Derivate die vorzugsweise eine oder mehrere polymerisierbare oder alkoxilierbare Seitenketten tragen,

Typ II: - ein amphiphiles Polymer, aufweisend eine oder mehrere hydrophobe Untereinheiten [$A_2$] auf der Basis eines Polyisobuten-Blockes, dessen Polyisobuten-Makromoleküle zumindestens 60 Mol% terminal angeordnete Doppelbindungen aufweisen und eine oder mehrere hydrophile Untereinheiten [$B_2$], wobei eine oder mehrere hydrophile Untereinheiten [$B_2$] aus sich wiederholenden Ethylenoxid- oder Ethylenoxid-/Propylenoxid-Einheiten gebildet sind, bevorzugt mit einem Anteil von 0-50 % Propylenoxid, besonders bevorzugt mit einem Anteil von 5-20 % Propylenoxideinheiten, oder eine oder mehrere hydrophile Untereinheiten [$B_2$] aus Monomereinheiten, ausgewählt aus der nachfolgenden Gruppe: (Meth)acrylsäure, auch teilweise oder vollständig neutralisiert, (Meth)acrylate, Vinylacetat, Vinylalkohol, Vinylpyrrolidon, Allylalkohol, Styrol sowie hydrophile Derivate der vorstehend aufgeführten Monomereinheiten oder aus Mischungen hiervon gebildet sind, oder

Typ III: - ein amphiphiles Polymer mit der allgemeinen Strukturformel

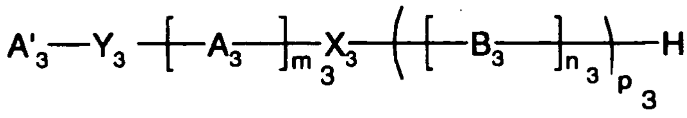
,

worin

$A'_3$-$Y_3$ ein monofunktioneller unverzweigter oder verzweigter Alkohol- oder Thiolrest mit 8 bis 30 Kohlenstoffatomen pro Molekül ist,

$A_3$ eine Struktureinheit mit der Formel

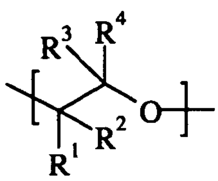
,

worin

$R^1$, $R^2$, $R^3$ und $R^4$ unabhängig voneinander die Substituenten Wasserstoff, Methyl, Ethyl, n-Propyl, iso-Propyl, Oktyl- oder Phenyl sind, mit der Einschränkung, dass höchstens drei der Substituenten $R^1$, $R^2$, $R^3$ und $R^4$ Wasserstoff sind,

$m_3$ eine Laufzahl im Bereich von 10 bis 300,

$X_3$ eine Struktureinheit mit der Formel

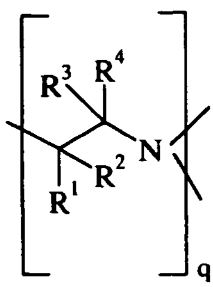

ist, worin die Substituenten

$R^1$, $R^2$, $R^3$ und $R^4$ unabhängig voneinander jeweils Wasserstoff, Methyl, Ethyl, n-Propyl, iso-Propyl, Oktyl oder Phenyl sind,

q = 0 oder q = 1,

$B_3$ eine monomere Untereinheit basierend auf Ethylenoxid oder eine Mischung aus Ethylenoxid und Propylenoxid,

$n_3$ eine Laufzahl im Bereich von 20 bis 500 und

$p_3$ = q + 1 ist.

**2.** Verwendung nach Anspruch 1, **dadurch gekennzeichnet, dass** die Mischung als wässrige Lösung eingesetzt wird.

**3.** Verwendung nach Anspruch 1 oder 2, wobei das Cotensid eine Substanz oder eine Gruppe von Substanzen vom Typ I ist, **dadurch gekennzeichnet, dass** das Monomer $A_1$ eine oder mehrere hydrophobe Seitenketten trägt.

4. Verwendung nach einem der Ansprüche 1 bis 3, wobei das Cotensid eine Substanz oder eine Gruppe von Substanzen vom Typ I ist, **dadurch gekennzeichnet, dass**

$$\left[X_1\right]_l$$

ein hydrophiler Polyethylenoxid- oder Polyethylenoxid-/Polypropylenoxid-Block ist.

5. Verwendung nach Anspruch 4, wobei das Cotensid eine Substanz oder eine Gruppe von Substanzen vom Typ I ist, **dadurch gekennzeichnet, dass** das die Struktureinheit

$$\left[X_1\right]_l$$

bildende Monomer eine Mischung aus Ethylenoxid und Propylenoxid, bevorzugt mit einem Propylenoxidanteil von 5 bis 20 % , ist.

6. Verwendung nach Anspruch 4 oder 5, wobei das Cotensid eine Substanz oder eine Gruppe von Substanzen vom Typ I ist, **dadurch gekennzeichnet, dass** alle oder ein Teil der aus den hydrophilen Ethylenoxid- oder Ethylenoxid-/Propylenoxid-Blocken gebildeten Seitenketten in jeweils einem hydrophoben Block, vorzugsweise einem hydrophoben Poly- oder Oligoalkylenoxid oder in einer verzweigten oder unverzweigten $C_{10}$- bis $C_{30}$-Alkylkette enden.

7. Verwendung nach einem der Ansprüche 1 bis 6, wobei das Cotensid eine Substanz oder eine Gruppe von Substanzen vom Typ I ist, **dadurch gekennzeichnet, dass** das die Struktureinheit

$$\left[A'_1\right]_{m_1}$$

bildende Monomer Maleinsäureanhydrid und das Monomer $X_1$ Ethylenoxid ist.

8. Verwendung nach einem der Ansprüche 1 bis 6, wobei das Cotensid eine Substanz oder eine Gruppe von Substanzen vom Typ I ist, **dadurch gekennzeichnet, dass** die Struktureinheit

$$\left[A'_1\right]_{m_1}$$

bildende Monomer Vinylalkohol ist und das Monomer $X_1$ (Meth)acrylsäure oder Ethylenoxid oder eine Mischung aus Ethylenoxid und Propylenoxid ist.

9. Verwendung nach Anspruch 1 oder 2, wobei das Cotensid eine Substanz oder eine Gruppe von Substanzen vom Typ II ist, **dadurch gekennzeichnet, dass** der Polyisobuten-Block aus Polyisobuten-Makromolekülen gebildet ist, wovon wenigstens 80 Mol-%, bezogen auf die Gesamtzahl der Polyisobuten-Makromoleküle, terminal angeordnete Doppelbindungen aufweisen.

10. Verwendung nach einem der Ansprüche 1, 2 oder 9, wobei das Cotensid eine Substanz oder eine Gruppe von Substanzen vom Typ II ist, **dadurch gekennzeichnet, dass** der Polyisobuten-Block ein zahlenmittleres Molekulargewicht $M_n$ im Bereich von 200 bis 20000 Dalton, bevorzugt im Bereich von 200 bis 5000 Dalton, aufweist.

11. Verwendung nach einem der Ansprüche 1, 2, 9 oder 10, wobei das Cotensid eine Substanz oder eine Gruppe von Substanzen vom Typ II ist, **dadurch gekennzeichnet, dass** der Polyisobuten-Block einen Polydispersitätsindex

(PDI) im Bereich von 1,05 bis 10, bevorzugt im Bereich von 1,05 bis 5, besonders bevorzugt im Bereich von 1,05 bis 2, aufweist.

**12.** Verwendung nach einem der Ansprüche 1, 2 oder 9 bis 11, wobei das Cotensid eine Substanz oder eine Gruppe von Substanzen vom Typ II ist, **dadurch gekennzeichnet, dass** man den Polyisobuten-Block unter Einführung von polaren Gruppen funktionalisiert und den funktionalisierten Polyisobutenblock anschließend gegebenenfalls weiter modifiziert.

**13.** Verwendung nach Anspruch 12, **dadurch gekennzeichnet, dass** man die Funktionalisierung des Polyisobuten-Blocks durch eine Umsetzung, die aus der nachfolgenden Aufzählung ausgewählt ist, durchführt:

i) Umsetzung mit aromatischen Hydroxyverbindungen in Gegenwart eines Alkylierungskatalysators unter Erhalt von mit Polyisobutenen alkylierten aromatischen Hydroxyverbindungen,
ii) Umsetzung des Polyisobuten-Blocks mit einer Peroxi-Verbindung unter Erhalt eines epoxidierten Polyisobutens,
iii) Umsetzung des Polyisobuten-Blocks mit einem Alken, das eine elektronenarme Doppelbindung aufweist (Enophil), in einer En-Reaktion,
iv) Umsetzung des Polyisobuten-Blocks mit Kohlenmonoxid und Wasserstoff in Gegenwart eines Hydroformylierungskatalysators unter Erhalt eines hydroformylierten Polyisobutens,
v) Umsetzung des Polyisobuten-Blocks mit einem Phosphorhalogenid oder einem Phosphoroxychlorid unter Erhalt eines mit Phosphongruppen funktionalisiertem Polyisobutens,
vi) Umsetzung des Polyisobuten-Blocks mit einem Boran und anschließender oxidativer Spaltung unter Erhalt eines hydroxylierten Polyisobutens,
vii) Umsetzung des Polyisobuten-Blocks mit einer $SO_3$-Quelle, bevorzugt Acetylsulfat unter Erhalt eines Polyisobutens mit terminalen Sulfonsäuregruppen,
viii) Umsetzung des Polyisobuten-Blocks mit Stickoxiden und anschließende Hydrierung unter Erhalt eines Polyisobutens mit terminalen Aminogruppen.

**14.** Verwendung nach einem der Ansprüche 1, 2 oder 9 bis 13, wobei das Cotensid eine Substanz oder eine Gruppe von Substanzen vom Typ II ist, **dadurch gekennzeichnet, dass** das Cotensid eine $A_{2p}B_{2q}$, Struktur, wobei p und q unabhängig voneinander jeweils einen ganzen Wert zwischen 1 und 8 annehmen, aufweist.

**15.** Verwendung nach Anspruch 1 oder 2, wobei das Cotensid eine Substanz oder eine Gruppe von Substanzen vom Typ III ist, **dadurch gekennzeichnet, dass** die Struktureinheit $A_3$ aus einem oder mehreren der nachfolgenden Monomere: Propenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 2,3-Hexenoxid 3,4-Hexenoxid, 2-Methyl-1,2-pentenoxid, 2-Ethyl-1,2-butenoxid, 3-Methyl-1,2-Pentenoxid, Decenoxid, 4-Methyl-1,2-pentenoxid, Styroloxid gebildet ist.

**16.** Verwendung nach einem der Ansprüche 1, 2 oder 15, wobei das Cotensid eine Substanz oder eine Gruppe von Substanzen vom Typ III ist, **dadurch gekennzeichnet, dass** die Laufzahl $m_3$ einen Wert im Bereich von 50 bis 250, bevorzugt von 60 bis 160, annimmt.

**17.** Verwendung nach einem der Ansprüche 1, 2, 15 oder 16, wobei das Cotensid eine Substanz oder eine Gruppe von Substanzen vom Typ III ist, **dadurch gekennzeichnet, dass** die Laufzahl $n_3$ einen Wert im Bereich zwischen 50 und 300 annimmt.

**18.** Verwendung nach einem der Ansprüche 1, 2 oder 15 bis 17, wobei das Cotensid eine Substanz oder eine Gruppe von Substanzen vom Typ III ist, **dadurch gekennzeichnet, dass** $B_3$ eine monomere Untereinheit basierend auf einer Ethylenoxid-/ Propylenoxid-Mischung mit 0 bis 50 %, bevorzugt 5 bis 20 % Propylenoxid, ist.

**19.** Verwendung, nach einem der Ansprüche 1 bis 18, **dadurch gekennzeichnet, dass** der Anteil des Cotensids, bezogen auf das Tensid, im Bereich von 1 bis 50% liegt.

**20.** Verfahren zum Fluten von unterirdischen Lagerstätten von Kohlenwasserstoffen zwecks Mobilisierung und Förderung der Kohlenwasserstoffe aus den unterirdischen Lagerstätten unter Verwendung einer flüssigen Mischung, enthaltend ein Tensid und ein Cotensid, wobei das Cotensid der Definition in einem der Ansprüche 1 bis 18 entspricht, **dadurch gekennzeichnet, dass** die flüssige Mischung, enthaltend ein Tensid und ein Cotensid durch mindestens ein Bohrloch in eine unterirdische Lagerstätte von Kohlenwasserstoffen eingepresst und der Lagerstätte durch

mindestens ein davon verschiedenes Bohrloch Kohlenwasserstoffe entnommen werden und dass in einer weiteren Verfahrensstufe in das Bohrloch Wasser eingepresst wird.

**21.** Verfahren nach Anspruch 20, **dadurch gekennzeichnet, dass** die flüssige Mischung, enthaltend ein Tensid und ein Cotensid eine wässrige Lösung mit einer Konzentration von 20 bis 95 Gew.%, bevorzugt von 30 bis 60 Gew.-% der Summe aus Tensid und Cotensid ist.

**22.** Verfahren nach Anspruch 20, **dadurch gekennzeichnet, dass** die flüssige Mischung, enthaltend ein Tensid und ein Cotensid vor dem Einpressen in das Bohrloch mit Wasser auf eine Konzentration von 0,01 bis 10 Gew.%, insbesondere 0,05 bis 7 Gew.%, bevorzugt 0,05 bis 5 Gew.-% verdünnt wird, oder dass die Verdünnung der wässrigen Lösung, enthaltend ein Tensid und ein Cotensid mit Wasser erfolgt, welches sich bereits in der Lagestätte befindet.

**23.** Verfahren nach einem der Ansprüche 20 bis 22, **dadurch gekennzeichnet, dass** vor dem Einpressen der flüssigen Mischung, enthaltend ein Tensid und ein Cotensid in die unterirdische Lagerstätte ein Opferagenz eingebracht und/oder dass nach dem Einpressen der flüssigen Mischung enthaltend ein Tensid und ein Cotensid in die unterirdische Lagerstätte eine Polymerflut eingebracht wird.

## Claims

**1.** The use of a liquid mixture comprising a surfactant and a cosurfactant, the proportion of the cosurfactant, based on the surfactant, being in the range from 0.01 to 99.99%, for flooding underground deposits of hydrocarbons for mobilizing and recovering the hydrocarbons from the underground deposits, the cosurfactant being a substance or a group of substances selected from the following list:

type I: - an amphiphilic comb polymer having a backbone with two or more side chains attached to the backbone, the backbone of the comb polymer being hydrophobic and all side chains of the comb polymer being hydrophilic and the comb polymer comprising repeating structural units

$$[A_1]_{n_1},\ [A'_1]_{m_1},\ \text{and}\ [X_1]_l,$$

and the structural units

$$[A_1]_{n_1}\ \text{and}\ [A'_1]_{m_1}$$

forming the backbone and the structural unit

$$[A'_1]_{m_1}$$

having an anchor function for binding the structural units

$$[X_1]_l$$

forming the side chains, and the variables $n_1$, $m_1$ and l being mole fractions, where

$$n_1+m_1+l= 1,$$

$$n_1 \geq m_1$$

and

$$l > m_1,$$

and the cosurfactant having an average molar mass in the range from 500 to 100 000 g/mol, preferably in the range from 1000 to 50 000 g/mol, the monomer forming the structural unit

$$\left[A_1\right]_{r_1}$$

being a substance or a mixture of substances selected from the following list:

- straight-chain or branched alkenes having 15 to 50, preferably having 20 to 35, carbon atoms per molecule, preferably $\alpha$-olefins,
- ethylene,
- reactive polyisobutenes, formed from polyisobutene chains which still have a reactive double bond at the end or in the vicinity of the end of the polyisobutene chain,
- styrene, or
- (meth)acrylates having hydrophobic side chains, and

the monomer forming the structural unit

$$\left[A'_1\right]_{m_1}$$

being a substance or a mixture of substances selected from the following list:

- maleic anhydride,
- vinyl alcohols or their derivatives which preferably carry a polymerizable or alkoxylatable side chain,
- (meth)acrolein or
- (meth)acrylic acid or its derivatives which preferably carry one or more polymerizable or alkoxylatable side chains,

type II: - an amphiphilic polymer having one or more hydrophobic subunits [$A_2$] based on a polyisobutene block, whose at least 60 mol% of polyisobutene macromolecules have terminally arranged double bonds, and one or more hydrophilic subunits [$B_2$], one or more hydrophilic subunits [$B_2$] being formed from repeating ethylene oxide or ethylene oxide/propylene oxide units, preferably having a proportion of 0-50% of propylene oxide, particularly preferably having a proportion of 5-20% of propylene oxide units, or one or more hydrophilic subunits [$B_2$] being formed from monomer units selected from the following group: (meth)acrylic acid, also partly or completely neutralized, (meth)acrylates, vinyl acetate, vinyl alcohol, vinylpyrrolidone, allyl alcohol, styrene and hydrophilic derivatives of the abovementioned monomer units, or being formed from mixtures thereof, or
type III: - an amphiphilic polymer having the general structural formula

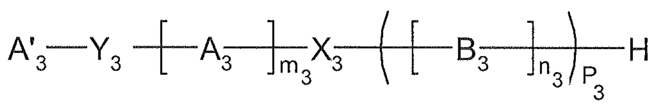

A'$_3$-$Y_3$ is a monofunctional straight-chain or branched alcohol or thiol radical having 8 to 30 carbon atoms per molecule,
$A_3$ is a structural unit having the formula

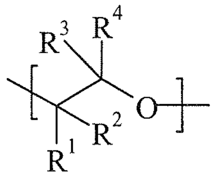

,

in which

$R^1$, $R^2$, $R^3$ and $R^4$, independently of one another, are the substituents hydrogen, methyl, ethyl, n-propyl, isopropyl, octyl or phenyl, with the restriction that not more than three of the substituents $R^1$, $R^2$, $R^3$ and $R^4$ are hydrogen,
$m_3$ is a consecutive number in the range from 10 to 300,
$X_3$ is a structural unit having the formula

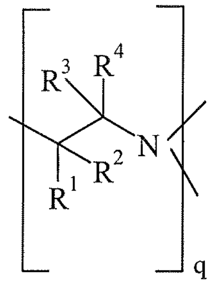

in which the substituents

$R^1$, $R^2$, $R^3$ and $R^4$, independently of one another, are each hydrogen, methyl, ethyl, n-propyl, isopropyl, octyl or phenyl,
q = 0 or q = 1,
$B_3$ is a monomeric subunit based on ethylene oxide or a mixture of ethylene oxide and propylene oxide,
$n_3$ is a consecutive number in the range from 20 to 500 and
$P_3$ = q + 1.

**2.** The use according to claim 1, wherein the mixture is used in the form of an aqueous solution.

**3.** The use according to claim 1 or 2, the cosurfactant being a substance or a group of substances of type I, wherein the monomer $A_1$ carries one or more hydrophobic side chains.

**4.** The use according to any of claims 1 to 3, the cosurfactant being a substance or a group of substances of type I, wherein

$$\left[X_1\right]_1$$

is a hydrophilic polyethylene oxide or polyethylene oxide/polypropylene oxide block.

**5.** The use according to claim 4, the cosurfactant being a substance or a group of substances of type I, wherein the monomer forming the structural unit

$$\left[X_1\right]_1$$

is a mixture of ethylene oxide and propylene oxide, preferably having a proportion of from 5 to 20% of propylene oxide.

**6.** The use according to claim 4 or 5, the cosurfactant being a substance or a group of substances of type I, wherein all or some of the side chains formed from the hydrophilic ethylene oxide or ethylene oxide/propylene oxide blocks end in each case in a hydrophobic block, preferably a hydrophobic poly- or oligoalkylene oxide, or in a branched or straight $C_{10}$- to $C_{30}$-alkyl chain.

**7.** The use according to any of claims 1 to 6, the cosurfactant being a substance or a group of substances of type I, wherein the monomer forming the structural unit

$$\left[A'_1\right]_{m_1}$$

is maleic anhydride and the monomer $X_1$ is ethylene oxide.

**8.** The use according to any of claims 1 to 6, the cosurfactant being a substance or a group of substances of type I, wherein the monomer forming the structural unit

$$\left[A'_1\right]_{m_1}$$

is vinyl alcohol and the monomer $X_1$ is (meth)acrylic acid or ethylene oxide or a mixture of ethylene oxide and propylene oxide.

**9.** The use according to claim 1 or 2, the cosurfactant being a substance or a group of substances of type II, wherein the polyisobutene block is formed from polyisobutene macromolecules, of which at least 80 mol%, based on the total number of polyisobutene macromolecules, have terminally arranged double bonds.

**10.** The use according to any of claims 1, 2 and 9, the cosurfactant being a substance or a group of substances of type II, wherein the polyisobutene block has a number average molecular weight $M_n$ in the range from 200 to 20 000 Dalton, preferably in the range from 200 to 5000 Dalton.

**11.** The use according to any of claims 1, 2, 9 and 10, the cosurfactant being a substance or a group of substances of type II, wherein the polyisobutene block has a polydispersity index (PDI) in the range from 1.05 to 10, preferably in the range from 1.05 to 5, particularly preferably in the range from 1.05 to 2.

**12.** The use according to any of claims 1, 2 and 9 to 11, the cosurfactant being a substance or a group of substances of type II, wherein the polyisobutene block is functionalized with introduction of polar groups and the functionalized polyisobutene block is, if appropriate, then further modified.

**13.** The use according to claim 12, wherein the functionalization of the polyisobutene block is carried out by a reaction which is selected from the following list:

i) reaction with aromatic hydroxy compounds in the presence of an alkylation catalyst to give aromatic hydroxy compounds alkylated with polyisobutenes,
ii) reaction of the polyisobutene block with a peroxy compound to give an epoxidized polyisobutene,
iii) reaction of the polyisobutene block with an alkene which has an electron-poor double bond (enophile) in an ene reaction,
iv) reaction of the polyisobutene block with carbon monoxide and hydrogen in the presence of a hydroformylation catalyst to give a hydroformylated polyisobutene,
v) reaction of the polyisobutene block with a phosphorus halide or a phosphorus oxychloride to give a polyisobutene functionalized with phosphonyl groups,
vi) reaction of the polyisobutene block with a borane and subsequent oxidative cleavage to give a hydroxylated polyisobutene,
vii) reaction of the polyisobutene block with an $SO_3$ source, preferably acetyl sulfate, to give a polyisobutene having terminal sulfo groups,
viii) reaction of the polyisobutene block with oxides of nitrogen and subsequent hydrogenation to give a polyisobutene having terminal amino groups.

**14.** The use according to any of claims 1, 2 and 9 to 13, the cosurfactant being a substance or a group of substances of type II, wherein the cosurfactant has an $A_{2p}B_{2q}$ structure, where p and q, independently of one another, each assume an integral value of from 1 to 8.

**15.** The use according to claim 1 or 2, the cosurfactant being a substance or a group of substances of type III, wherein the structural unit $A_3$ is formed from one or more of the following monomers: propene oxide, 1-butene oxide, 2,3-butene oxide, 2-methyl-1,2-propene oxide (isobutene oxide), 1-pentene oxide, 2,3-pentene oxide, 2-methyl-1,2-butene oxide, 3-methyl-1,2-butene oxide, 2,3-hexene oxide, 3,4-hexene oxide, 2-methyl-1,2-pentene oxide, 2-ethyl-1,2-butene oxide, 3-methyl-1,2-pentene oxide, decene oxide, 4-methyl-1,2-pentene oxide or styrene oxide.

**16.** The use according to any of claims 1, 2 and 15, the cosurfactant being a substance or a group of substances of type III, wherein the consecutive number $m_3$ assumes a value in the range from 50 to 250, preferably from 60 to 160.

**17.** The use according to any of claims 1, 2, 15 and 16, the cosurfactant being a substance or a group of substances of type III, wherein the consecutive number n assumes a value in the range from 50 to 300.

**18.** The use according to any of claims 1, 2 and 15 to 17, the cosurfactant being a substance or a group of substances of type III, wherein $B_3$ is a monomeric subunit based on an ethylene oxide/propylene oxide mixture having from 0 to 50%, preferably from 5 to 20%, of propylene oxide.

**19.** The use according to any of claims 1 to 18, wherein the proportion of the cosurfactant, based on the surfactant, is in the range from 1 to 50%.

**20.** A process for flooding underground deposits of hydrocarbons for mobilizing and recovering the hydrocarbons from the underground deposits using a liquid mixture comprising a surfactant and a cosurfactant, the cosurfactant corresponding to the definition in any of claims 1 to 18, wherein the liquid mixture comprising a surfactant and a cosurfactant is forced through at least one well into an underground deposit of hydrocarbons and hydrocarbons are withdrawn from the deposit through at least one well differing therefrom, and wherein water is forced into the well in a further process stage.

**21.** The process according to claim 20, wherein the liquid mixture comprising a surfactant and a cosurfactant is an aqueous solution having a concentration of from 20 to 95% by weight, preferably from 30 to 60% by weight, of the sum of surfactant and cosurfactant.

**22.** The process according to claim 20, the cosurfactant corresponding to the definition in any of claims 1 to 30, wherein the liquid mixture comprising a surfactant and a cosurfactant is diluted with water, before being forced into the well, to a concentration of from 0.01 to 10% by weight, in particular from 0.05 to 7% by weight, preferably from 0.05 to 5% by weight, or wherein the dilution of the aqueous solution comprising a surfactant and a cosurfactant is effected with water which is already present in the deposit.

**23.** The process according to any of claims 20 to 22, wherein a sacrificial agent is introduced into the underground deposit before forcing in the liquid mixture comprising a surfactant and a cosurfactant and/or wherein a polymer flood is introduced into the underground deposit after forcing in the liquid mixture comprising a surfactant and a cosurfactant.

**Revendications**

**1.** Utilisation d'un mélange liquide contenant un agent tensioactif et un co-agent tensioactif, la proportion de co-agent tensioactif, par rapport à l'agent tensioactif, se situant dans la plage de 0,01 à 99,99%, pour noyer des gisements souterrains d'hydrocarbures en vue de la mobilisation et du transport des hydrocarbures hors des gisements souterrains, **caractérisée en ce que** le co-agent tensioactif est une substance ou un groupe de substances, choisie (s) parmi l'énumération suivante :

Type I : un polymère en peigne, amphiphile, présentant une épine dorsale avec deux chaînes latérales ou plus, agencées sur l'épine dorsale, l'épine dorsale du polymère en peigne étant hydrophobe et toutes les chaînes latérales du polymère en peigne étant hydrophiles, où le polymère en peigne contient des unités de structure répétitives

$$[A_1]_{n_1} \; [A'_1]_{m_1} \text{ et } [X_1]_l$$

et où les unités de structure

$$[A_1]_{n_1} \text{ et } [A'_1]_{m_1}$$

forment l'épine dorsale et l'unité de structure

$$[A'_1]_{m_1}$$

présente une fonction d'ancrage pour la liaison avec les unités de structure formant les chaînes latérales

$$[X_1]_l$$

et où les variables $n_1$, $m_1$ et 1 sont des fractions molaires avec

$$n_1 + m_1 + l = 1,$$

$$n_1 \geq m_1$$

et

$$l > m_1,$$

et où le co-agent tensioactif présente une masse moléculaire moyenne dans la plage de 500 à 100 000 g/mole, de préférence dans la plage de 1000 à 50 000 g/mole, le monomère formant l'unité de structure

$$\left[A_1\right]_{n_1}$$

est une substance ou un mélange de substances, choisie(s) parmi l'énumération suivante :

- les alcènes non ramifiés ou ramifiés comprenant 15 à 50, de préférence 20 à 35 atomes de carbone par molécule, de préférence des $\alpha$-oléfines,
- l'éthylène,
- les polyisobutènes réactifs, formés à partir de chaînes de polyisobutène qui présentent encore une double liaison apte à la réaction en l'extrémité ou à proximité de l'extrémité de la chaîne de polyisobutène,
- le styrène ou
- les (méth)acrylates avec des chaînes latérales hydrophobes, et

le monomère formant l'unité de structure

$$\left[A'_1\right]_{m_1}$$

est une substance ou un mélange de substances, choisie(s) parmi l'énumération suivants :

- l'anhydride de l'acide maléique,
- les alcools vinyliques ou leurs dérivés, qui portent de préférence une chaîne latérale polymérisable ou alcoxylable,
- la (méth)acroléine ou
- l'acide (méth)acrylique ou ses dérivés, qui portent de préférence une ou plusieurs chaînes latérales polymérisables ou alcoxylables,

Type II : un polymère amphiphile présentant une ou plusieurs sous-unités hydrophobes [$A_2$] à base d'un bloc de polyisobutène, dont les macromolécules de polyisobutène présentent au moins 60% en mole de doubles liaisons disposées en position terminale et une ou plusieurs sous-unités hydrophiles [$B_2$], où une ou plusieurs sous-unités hydrophiles [$B_2$] sont formées par des unités répétitives d'oxyde d'éthylène ou d'oxyde d'éthylène/ oxyde de propylène, de préférence avec une proportion de 0-50% d'oxyde de propylène, de manière particulièrement préférée avec une proportion de 5-20% d'unités d'oxyde de propylène, ou une ou plusieurs sous-unités hydrophiles [$B_2$] sont formées par des unités monomères choisies dans le groupe suivant : acide (méth) acrylique, également partiellement ou totalement neutralisé, (méth)acrylates, acétate de vinyle, alcool vinylique, vinylpyrrolidone, alcool allylique, styrène ainsi que les dérivés hydrophiles des unités monomères indiquées ci-dessus ou par des mélanges de celles-ci, ou
Type III : un polymère amphiphile présentant la formule de structure générale

$$A'_3-Y_3-\left[-A_3-\right]_{m_3}X_3-\left(\left[-B_3-\right]_{n_3}\right)_{p_3}-H\,,$$

où

$A'_3$-$Y_3$ représente un radical alcool ou thiol monofonctionnel, non ramifié ou ramifié, comprenant 8 à 30 atomes de carbone par molécule,
$A_3$ représente une unité de structure de formule

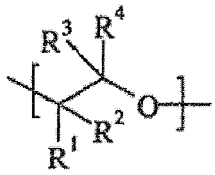

où

$R^1$, $R^2$, $R^3$ et $R^4$ représentent, indépendamment l'un de l'autre, les substituants hydrogène, méthyle, éthyle, n-propyle, iso-propyle, octyle ou phényle, avec comme limitation qu'au plus trois des substituants $R^1$, $R^2$, $R^3$ et $R^4$ représentent hydrogène,
$m_3$ représente un nombre dans la plage de 10 à 300,
$X_3$ représente une unité de structure de formule

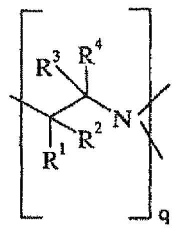

où les substituants

$R^1$, $R^2$ $R^3$ et $R^4$ représentent, indépendamment l'un de l'autre, à chaque fois hydrogène, méthyle, éthyle, n-propyle, iso-propyle, octyle ou phényle,
q = 0 ou q = 1,
$B_3$ représente une sous-unité monomère à base d'oxyde d'éthylène ou d'un mélange d'oxyde d'éthylène et d'oxyde de propylène,
$n_3$ représente un nombre dans la plage de 20 à 500 et
$p_3 = q + 1$.

2. Utilisation selon la revendication 1, **caractérisée en ce que** le mélange est utilisé sous forme de solution aqueuse.

3. Utilisation selon la revendication 1 ou 2, où le co-agent tensioactif est une substance ou un groupe de substances de type I, **caractérisée en ce que** le monomère $A_1$ porte une ou plusieurs chaînes latérales hydrophobes.

4. Utilisation selon l'une quelconque des revendications 1 à 3, où le co-agent tensioactif est une substance ou un groupe de substances de type I,
**caractérisée en ce que**

$$[X_1]_1$$

est un bloc hydrophile de poly(oxyde d'éthylène) ou de poly(oxyde d'éthylène)/poly(oxyde de propylène).

5. Utilisation selon la revendication 4, où le co-agent tensioactif est une substance ou un groupe de substances de type I, **caractérisée en ce que** le monomère formant l'unité de structure

$$[X_1]_1$$

est un mélange d'oxyde d'éthylène et d'oxyde de propylène, de préférence avec une proportion d'oxyde de propylène de 5 à 20%.

**6.** Utilisation selon la revendication 4 ou 5, où le co-agent tensioactif est une substance ou un groupe de substances de type I, **caractérisée en ce que** toutes les chaînes latérales formées par les blocs hydrophiles d'oxyde d'éthylène ou d'oxyde d'éthylène/oxyde de propylène ou une partie de celles-ci se terminent à chaque fois par un bloc hydrophobe, de préférence par un poly(oxyde d'alkylène) ou par un oligo(oxyde d'alkylène) ou par une chaîne $C_{10}$-$C_{30}$-alkyle ramifiée ou non ramifiée.

**7.** Utilisation selon l'une quelconque des revendications 1 à 6, où le co-agent tensioactif est une substance ou un groupe de substances de type I, **caractérisée en ce que** le monomère formant l'unité de structure

$$\left[A'_1\right]_{m_1}$$

est l'anhydride de l'acide maléique et le monomère $X_1$ est l'oxyde d'éthylène.

**8.** Utilisation selon l'une quelconque des revendications 1 à 6, où le co-agent tensioactif est une substance ou un groupe de substances de type I, **caractérisée en ce que** le monomère formant l'unité de structure

$$\left[A'_1\right]_{m_1}$$

est l'alcool vinylique et le monomère $X_1$ est l'acide (méth)acrylique ou l'oxyde d'éthylène ou un mélange d'oxyde d'éthylène et d'oxyde de propylène.

**9.** Utilisation selon la revendication 1 ou 2, où le co-agent tensioactif est une substance ou un groupe de substances de type II, **caractérisée en ce que** le bloc de polyisobutène est formé par des macromolécules de polyisobutène, dont au moins 80% en mole, par rapport au nombre total des macromolécules de polyisobutène, présentent des doubles liaisons disposées en position terminale.

**10.** Utilisation selon l'une quelconque des revendications 1, 2 ou 9, où le co-agent tensioactif est une substance ou un groupe de substances de type II, **caractérisée en ce que** le bloc de polyisobutène présente un poids moléculaire numérique moyen Mn dans la plage de 200 à 20 000 Daltons, de préférence dans la plage de 200 à 5000 Daltons.

**11.** Utilisation selon l'une quelconque des revendications 1, 2, 9 ou 10, où le co-agent tensioactif est une substance ou un groupe de substances de type II, **caractérisée en ce que** le bloc de polyisobutène présente un indice de polydispersité (PDI) dans la plage de 1,05 à 10, de préférence dans la plage de 1,05 à 5, de manière particulièrement préférée dans la plage de 1,05 à 2.

**12.** Utilisation selon l'une quelconque des revendications 1, 2 ou 9 à 11, où le co-agent tensioactif est une substance ou un groupe de substances de type II, **caractérisée en ce qu'**on fonctionnalise le bloc de polyisobutène avec introduction de groupes polaires et on modifie ensuite le cas échéant davantage le bloc de polyisobutène fonctionnalisé.

**13.** Utilisation selon la revendication 12, **caractérisée en ce qu'**on réalise la fonctionnalisation du bloc de polyisobutène par une transformation qui est choisie parmi l'énumération suivante :

i) transformation avec des composés hydroxy aromatiques en présence d'un catalyseur d'alkylation avec obtention de composés hydroxy aromatiques alkylés par des polyisobutènes,
ii) transformation du bloc de polyisobutène avec un composé peroxy avec obtention d'un polyisobutène époxydé ;
iii) transformation du bloc de polyisobutène avec un alcène, qui présente une double liaison pauvre en électrons (énophile) dans une réaction En,
iv) transformation du bloc de polyisobutène avec du monoxyde de carbone et de l'hydrogène en présence d'un

catalyseur d'hydroformylation avec obtention d'un polyisobutène hydroformylé,
v) transformation du bloc de polyisobutène avec un halogénure de phosphore ou un oxychlorure de phosphore avec obtention d'un polyisobutène fonctionnalisé par des groupes acide phosphonique,
vi) transformation du bloc de polyisobutène avec un borane et dissociation consécutive par oxydation avec obtention d'un polyisobutène hydroxylé ;
vii) transformation du bloc de polyisobutène avec une source de $SO_3$, de préférence du sulfate d'acétyle avec obtention d'un polyisobutène avec des groupes acide sulfonique en position terminale ;
viii) transformation du bloc de polyisobutène avec des oxydes d'azote et hydrogénation consécutive avec obtention d'un polyisobutène avec des groupes amino en position terminale.

**14.** Utilisation selon l'une quelconque des revendications 1, 2 ou 9 à 13, où le co-agent tensioactif est une substance ou un groupe de substances de type II, **caractérisée en ce que** le co-gent tensioactif présente une structure $A_{2p}B_{2q}$, où p et q présentent, indépendamment l'un de l'autre, à chaque fois une valeur entre 1 et 8.

**15.** Utilisation selon la revendication 1 ou 2, où le co-agent tensioactif est une substance ou un groupe de substances de type III, **caractérisée en ce que** l'unité de structure $A_3$ est formée par un ou plusieurs des monomères suivants : oxyde de propylène, oxyde de 1-butène, oxyde de 2,3-butène, oxyde de 2-méthyl-1,2-propylène (oxyde d'isobutène), oxyde de 1-pentène, oxyde de 2,3-pentène, oxyde de 2-méthyl-1,2-butène, oxyde de 3-méthyl-1,2-butène, oxyde de 2,3-hexène, oxyde de 3,4-hexène, oxyde de 2-méthyl-1,2-pentène, oxyde de 2-éthyl-1,2-butène, oxyde de 3-méthyl-1,2-pentène, oxyde de décène, oxyde de 4-méthyl-1,2-pentène, oxyde de styrène.

**16.** Utilisation selon l'une quelconque des revendications 1, 2 ou 15, où le co-agent tensioactif est une substance ou un groupe de substances de type III, **caractérisée en ce que** le nombre $m_3$ prend une valeur dans la plage de 50 à 250, de préférence de 60 à 160.

**17.** Utilisation selon l'une quelconque des revendications 1, 2, 15 ou 16, où le co-agent tensioactif est une substance ou un groupe de substances de type III, **caractérisée en ce que** le nombre $n_3$ prend une valeur dans la plage entre 50 et 300.

**18.** Utilisation selon l'une quelconque des revendications 1, 2 ou 15 à 17, où le co-agent tensioactif est une substance ou un groupe de substances de type III, **caractérisée en ce que** $B_3$ représente une sous-unité monomère à base d'un mélange d'oxyde d'éthylène et d'oxyde de propylène avec 0 à 50%, de préférence 5 à 20% d'oxyde de propylène.

**19.** Utilisation selon l'une quelconque des revendications 1 à 18, **caractérisée en ce que** la proportion du co-agent tensioactif, par rapport à l'agent tensioactif, est située dans la plage de 1 à 50% en poids.

**20.** Procédé pour noyer des gisements souterrains d'hydrocarbures en vue de la mobilisation et du transport des hydrocarbures hors des gisements souterrains avec utilisation d'un mélange liquide, contenant un agent tensioactif et un co-agent tensioactif, où le co-agent tensioactif correspond à la définition selon l'une quelconque des revendications 1 à 18, **caractérisé en ce que** le mélange liquide, contenant un agent tensioactif et un co-agent tensioactif est injecté via au moins un trou de forage dans un gisement souterrain d'hydrocarbures et des hydrocarbures sont prélevés du gisement via au moins un trou de forage différent du premier et **en ce qu'**on injecte dans une autre étape de procédé de l'eau dans le trou de forage.

**21.** Procédé selon la revendication 20, **caractérisé en ce que** le mélange liquide, contenant un agent tensioactif et un co-agent tensioactif est une solution aqueuse présentant une concentration de 20 à 95% en poids, de préférence de 30 à 60% en poids de la somme d'agent tensioactif et de co-agent tensioactif.

**22.** Procédé selon la revendication 20, **caractérisé en ce que** le mélange liquide, contenant un agent tensioactif et un co-agent tensioactif est dilué, avant l'injection dans le trou de forage, avec de l'eau à une concentration de 0,01 à 10% en poids, en particulier de 0,05 à 7% en poids, de préférence de 0,05 à 5% en poids, ou **en ce que** la dilution de la solution aqueuse, contenant un agent tensioactif et un co-agent tensioactif est réalisée avec de l'eau qui se trouve déjà dans le gisement.

**23.** Procédé selon l'une quelconque des revendications 20 à 22, **caractérisé en ce qu'**on introduit, avant l'injection du mélange liquide, contenant un agent tensioactif et un co-agent tensioactif dans le gisement souterrain, un agent perdu et/ou **en ce qu'**on introduit après l'injection du mélange liquide contenant un agent tensioactif et un co-agent tensioactif dans le gisement souterrain un flux de polymère.

FIG.1

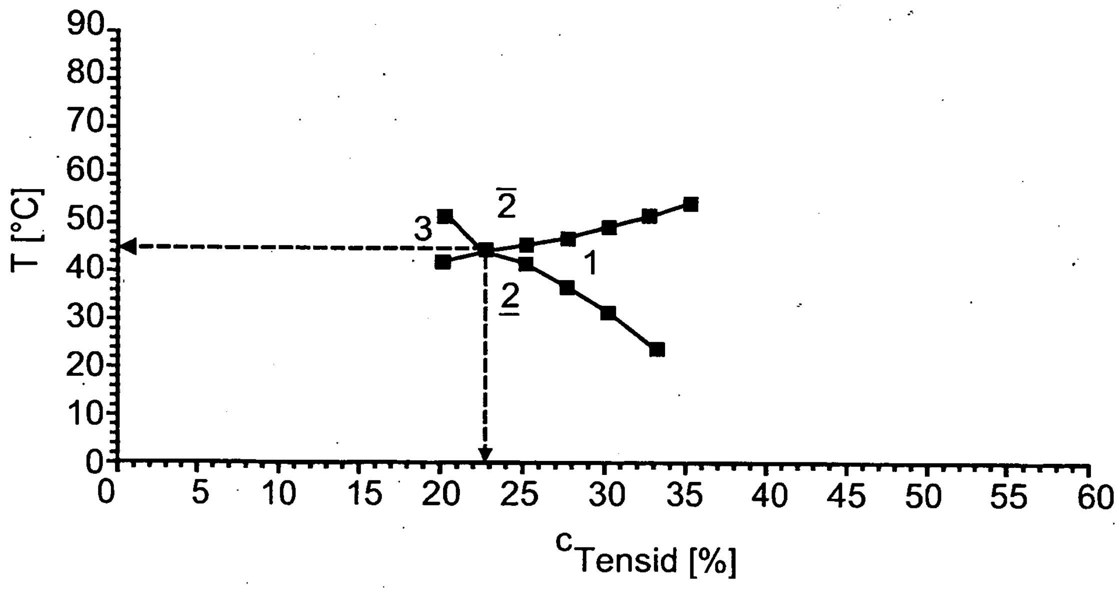
90
80
70
60
50
40
30
20
10
0
T [°C]
3
2
1
2
0
5
10
15
20
25
30
35
40
45
50
55
60
cTensid [%]

FIG.2

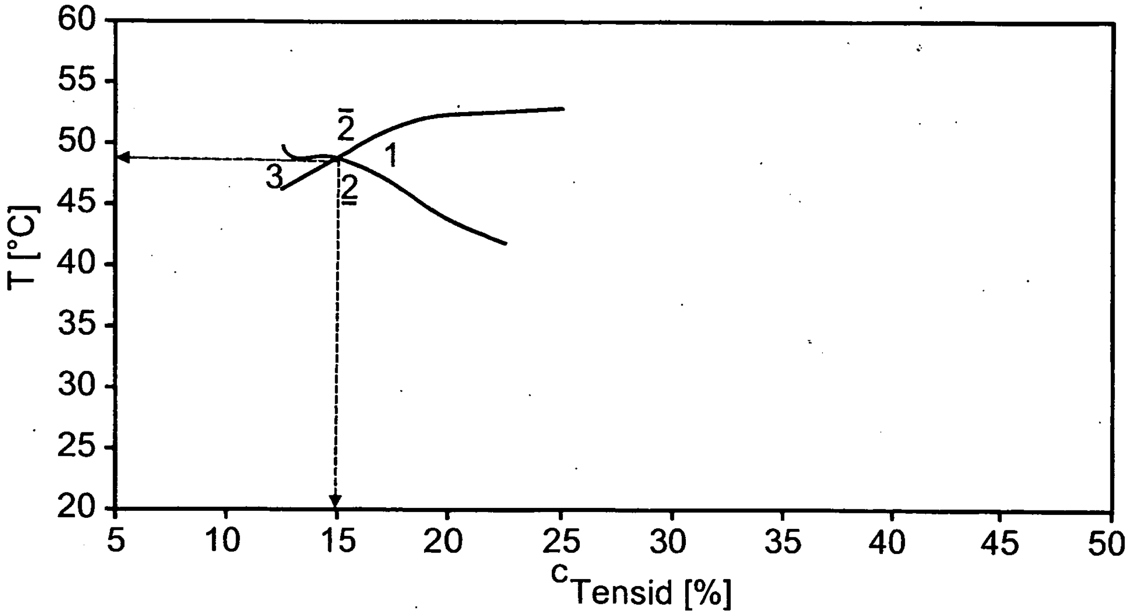

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4266610 A
- EP 0412389 A
- US 5300701 A
- WO 0226840 A
- WO 0125293 A
- WO 0125294 A
- EP 0476785 A
- DE 4319672 A
- EP 0156310 A
- DE 10125158
- DE 10147650
- WO 9507944 A
- WO 0155059 A
- WO 9003359 A
- DE 10003105 A
- WO 0170830 A
- WO 9703946 A
- US 4287370 A
- US 5434313 A
- DE 10035617 A
- DE 10243363 A
- DE 10243361 A
- DE 10243360 A
- DE 10243365 A
- DE 10243366 A
- DE 10243362 A
- DE 4325237 A


### In der Beschreibung aufgeführte Nicht-Patentliteratur


- *Journal of Petroleum Science and Engineering,* 1998, vol. 19, 265-280
- **Moore ; Slobod.** *nach D.O. Shah: Surface Phenomena in Enhanced Oil Revovery,* 1959
- **Kennedy ; Ivan.** Carbocationic Macromolecular Engineering. Hanser Publishers, 1992
- Analytiker-Taschenbuch. 1984, vol. 4, 433-442
- **J. March.** Advanced Organic Chemistry. Verlag John Wiley & Sons, 534-539
- **J. March.** Advanced Organic Chemistry. Verlag John Wiley & Sons, 826-829
- **H. Mach ; P. Rath.** *Lubrication Science,* 1999, vol. II, 175-185
- **J. March.** Advanced Organic Chemistry. Verlag John Wiley & Sons, 1992, 701ff
- **J. March.** Advanced Organic Chemistry. Verlag John Wiley & Sons, 783-789
- **Beilstein E.** ULLMANNS ENCYCLOPEDIA OF INDUSTRIAL CHEMISTRY. vol. IV 1, 32 68
- Ullmanns Encyclopedia of Industrial Chemistry. vol. A1, 323, 328f
- Aldol-Addition. **Römpp.** Chemie Lexikon. 91
- **Marcel Guerbet.** *C.R. Acad Sci Paris,* 1989, vol. 128 (511), 1002
- **Römpp.** Chemie Lexikon. Georg Thieme Verlag
- *Tetrahedron,* vol. 23, 1723-1733